# EUROPEAN PATENT APPLICATION

(11) **EP 4 712 620 A1**
(43) Date of publication of application: **18.03.2026**
(21) Application number: 23936006.8
(22) Date of filing: 08.05.2023
(51) Int. Cl.: H04W 72/0446, H04L 5/00

(54) **RECEPTION DETERMINATION METHOD AND APPARATUS, AND RECEPTION INDICATION METHOD AND APPARATUS**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/092852
(87) International publication number: WO 2024/229678

(57) **Abstract**

The present disclosure relates to the technical field of communications, and specifically relates to a reception determination method and apparatus, a reception indication method and apparatus, a communication apparatus, and a storage medium. The reception determination method comprises: according to first information sent by a network device, determining a symbol that can be used for receiving a physical downlink shared channel (PDSCH) transmitted in a plurality of slots, wherein the symbol comprises at least one of a sub-band full-duplex (SBFD) symbol and a non-SBFD symbol. In the present disclosure, a terminal can determine, according to first information, a symbol that can be used for receiving a PDSCH transmitted in a plurality of slots. On this basis, it can be ensured that the symbol which is determined by the terminal and can be used for receiving the PDSCH transmitted in the plurality of slots is consistent with the understanding of a network device, which is conductive to ensuring the communication quality between the network device and the terminal.

## Description

### TECHNICAL FIELD

The present disclosure relates to the communication technical field, and in particular to a reception determination method, a reception indication method, a reception determination apparatus, a reception indication apparatus, a communication system, a communication apparatus, and a computer-readable storage medium.

### BACKGROUND

A network device may send a Physical Downlink Shared Channel (PDSCH) to a terminal in multiple slots, but this may cause a problem in some communication scenarios.

### SUMMARY

Embodiments of the present disclosure propose a reception determination method, a reception indication method, a reception determination apparatus, a reception indication apparatus, a communication system, a communication apparatus, and a computer-readable storage medium to solve the technical problem in related art.

According to a first aspect of an embodiment of the present disclosure, a reception determination method is proposed. The method is performed by a terminal. The method includes: determining a symbol that can be used to receive a Physical Downlink Shared Channel (PDSCH) transmitted in multiple slots according to first information sent by a network device, where the symbol includes at least one of: a Subband Full Duplex (SBFD) symbol or a non-SBFD symbol.

According to a second aspect of an embodiment of the present disclosure, a reception indication method is proposed. The method is performed by a network device. The method includes: sending first information to a terminal, where the first information is used to indicate to the terminal a symbol that can be used to receive a PDSCH transmitted in multiple slots, and the symbol includes at least one of: an SBFD symbol or a non-SBFD symbol.

According to a third aspect of an embodiment of the present disclosure, a reception determination apparatus is proposed. The apparatus is configured in a terminal. The apparatus includes: a processing module configured to determine a symbol that can be used to receive a Physical Downlink Shared Channel (PDSCH) transmitted in multiple slots according to first information sent by a network device, where the symbol includes at least one of: a Subband Full Duplex (SBFD) symbol or a non-SBFD symbol.

According to a fourth aspect of an embodiment of the present disclosure, a reception indication apparatus is proposed. The apparatus is configured in a network device. The apparatus includes: a sending module configured to send first information to a terminal, where the first information is used to indicate to the terminal a symbol that can be used to receive a PDSCH transmitted in multiple slots, and the symbol includes at least one of: an SBFD symbol or a non-SBFD symbol.

According to a fifth aspect of an embodiment of the present disclosure, a communication system is proposed, including a terminal and a network device. The terminal is configured to implement the above-mentioned reception determination method, and the network device is configured to implement the above-mentioned reception indication method.

According to a sixth aspect of an embodiment of the present disclosure, a communication apparatus is proposed, including: a processor; and a memory configured to store a computer program, where when the computer program is executed by the processor, the above-mentioned reception determination method is implemented.

According to a seventh aspect of an embodiment of the present disclosure, a communication apparatus is proposed, including: a processor; and a memory configured to store a computer program, where when the computer program is executed by the processor, the above-mentioned reception indication method is implemented.

According to an eighth aspect of an embodiment of the present disclosure, a computer-readable storage medium is proposed for storing a computer program. When the computer program is executed by a processor, the above-mentioned reception determination method is implemented.

According to a ninth aspect of an embodiment of the present disclosure, a computer-readable storage medium is proposed for storing a computer program. When the computer program is executed by a processor, the above-mentioned reception indication method is implemented.

According to the embodiments of the present disclosure, a terminal may receive first information sent by a network device, and may further determine, according to the first information, symbol(s) that can be used to receive a PDSCH transmitted in multiple slots. For example, it may be determined that the PDSCH transmitted in multiple slots can be received only on an SBFD symbol, or it may be determined that the PDSCH transmitted in multiple slots can be received only on a non-SBFD symbol, or it may be determined that the PDSCH transmitted in multiple slots can be received in both the SBFD symbol and the non-SBFD symbol. Accordingly, it can be ensured that the symbol(s) determined by the terminal as capable of being used to receive the PDSCH transmitted in multiple slots is(are) consistent with the understanding of the network device, which is conducive to ensuring the communication quality between the network device and the terminal.

### BRIEF DESCRIPTION OF THE DRAWINGS

In order to more clearly illustrate the technical solutions in the embodiments of the present disclosure, the following briefly introduces the drawings required for use in the description of the embodiments. Obviously, the drawings described below are only some embodiments of the present disclosure. For those of ordinary skill in this art, other drawings may be obtained based on these drawings without any creative work.
FIG. 1 is a schematic diagram showing an application scenario according to an embodiment of the present disclosure.
FIG. 2 is a schematic diagram showing an SBFD slot according to an embodiment of the present disclosure.
FIG. 3 is a schematic flowchart showing a reception determination method according to an embodiment of the present disclosure.
FIG. 4A is a schematic diagram showing a frequency domain resource according to an embodiment of the present disclosure.
FIG. 4B is a schematic diagram showing another frequency domain resource according to an embodiment of the present disclosure.
FIG. 5 is a schematic flowchart showing another reception determination method according to an embodiment of the present disclosure.
FIG. 6 is a schematic flowchart showing yet another reception determination method according to an embodiment of the present disclosure.
FIG. 7 is a schematic flowchart showing yet another reception determination method according to an embodiment of the present disclosure.
FIG. 8 is a schematic flowchart showing yet another reception determination method according to an embodiment of the present disclosure.
FIG. 9 is a schematic flowchart showing yet another reception determination method according to an embodiment of the present disclosure.
FIG. 10 is a schematic flowchart showing yet another reception determination method according to an embodiment of the present disclosure.
FIG. 11 is a schematic flowchart showing yet another reception determination method according to an embodiment of the present disclosure.
FIG. 12 is a schematic flowchart showing yet another reception determination method according to an embodiment of the present disclosure.
FIG. 13 is a schematic flowchart showing yet another reception determination method according to an embodiment of the present disclosure.
FIG. 14 is a schematic flowchart showing a reception indication method according to an embodiment of the present disclosure.
FIG. 15 is a schematic block diagram showing a reception determination apparatus according to an embodiment of the present disclosure.
FIG. 16 is a schematic block diagram showing a reception indication apparatus according to an embodiment of the present disclosure.
FIG. 17 is a schematic block diagram showing an apparatus for reception indication according to an embodiment of the present disclosure.
FIG. 18 is a schematic block diagram showing an apparatus for reception determination according to an embodiment of the present disclosure.

### DETAILED DESCRIPTION

Implementations or embodiments of the present disclosure are not exhaustive, but are merely illustrations of a part of implementations or embodiments, and are not intended to be specific limitations on the scope of protection of the present disclosure. Each step in a certain implementation or embodiment may be implemented as an independent example, and steps may be arbitrarily combined if such combination will not cause contradiction. For example, a solution obtained after removing a part of steps in a certain implementation or embodiment may also be implemented as an independent embodiment, and the order of steps in a certain implementation or embodiment may be arbitrarily exchanged. In addition, optional schemes or optional examples in a certain implementation or embodiment may be arbitrarily combined; in addition, various implementations or embodiments may be arbitrarily combined. For example, a part or all of steps of different implementations or embodiments may be arbitrarily combined, and a certain implementation or embodiment may be arbitrarily combined with an optional scheme or an optional example of other implementations or embodiments.

In some implementations or embodiments, the terms "in response to...", "in a case that...", "at the time of...", "when", "in a case of...", "if", etc. in the present disclosure may be interchangeable with each other.

In some implementations or embodiments, the expressions of the present disclosure, such as "A or B", "A and/or B", "at least one of A and B", "A in a case, and B in another case", "A in response to a case, and B in response to another case ", etc., may include at least one of the following technical solutions according to situations: executing A independently of B, that is, A in some implementations or embodiments; executing B independently of A, that is, B in some implementations or embodiments; selectively executing A or B, that is, selective execution from A and B in some implementations or embodiments; executing both A and B, that is, A and B in some implementations or embodiments.

In some implementations or embodiments, "including/comprising A", "containing A", "used to indicate A" and "carrying A" in the present disclosure may be interpreted as directly carrying A, or may be interpreted as indirectly indicating A.

In addition, each element, each row, or each column in a table involved in the present disclosure may be implemented as an independent embodiment, and combination(s) of any element(s), any row(s), and any column(s) may also be implemented as independent embodiment(s).

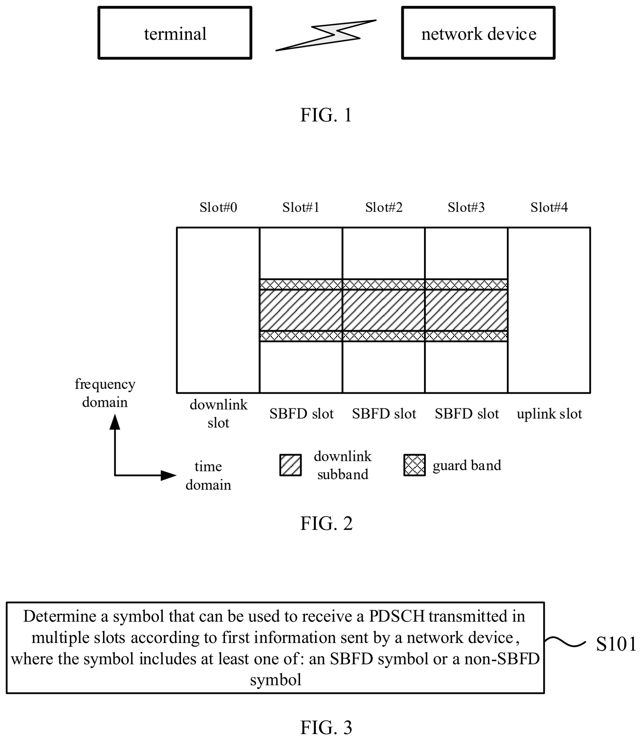

FIG. 1 is a schematic diagram showing an application scenario according to an embodiment of the present disclosure.

As shown in FIG. 1, the embodiments of the present disclosure may be applied to a scenario where a terminal communicates with a network device, but are not limited to such scenario. The entities shown in FIG. 1 are examples, and the implementations or embodiments of the present disclosure may include all or part of the entities in FIG. 1, or may include other entities than that shown in FIG. 1. The number of entities is arbitrary and is not limited to the number in FIG. 1. The connection relationship shown in FIG. 1 is an example, and any entities may be connected or not, and their connection may be in any manner, the connection may be a direct connection or an indirect connection, or the connection may be a wired connection or a wireless connection.

The terminal in the embodiments of the present disclosure includes, but not limited to, a communication apparatus such as a mobile phone, a tablet computer, a wearable device, a sensor, an Internet of Things device, etc. The terminal may communicate with the network device. The network device includes, but not limited to, a network device in a communication system such as 4G, 5G or 6G, etc., for example, a base station or a core network, etc.

In an embodiment, the network device may configure a subband for the terminal. For example, the network device may configure an uplink subband for the terminal in a slot. For example, the network device may configure a downlink subband for the terminal in a slot.

It should be noted that the uplink involved in the embodiments of the present disclosure may be referred to as UpLink (UL), and the downlink involved may be referred to as DownLink (DL).

A slot configured with an uplink subband includes at least one of: a downlink slot, a flexible slot, or an uplink slot. A slot configured with a downlink subband includes at least one of: an uplink slot, a flexible slot, or a downlink slot.

The network device may perform a full-duplex communication in a slot configured with an uplink subband or a slot configured with a downlink subband. Therefore, the slot configured with the uplink subband and the slot configured with the downlink subband may also be referred to as Subband Full Duplex (SBFD) slots. Correspondingly, a slot not configured with a subband may be referred to as a non-SBFD slot. The terminal may be a terminal that is capable of performing a half-duplex communication in an SBFD slot. For example, in an SBFD slot, the terminal may perform an uplink transmission but cannot receive a downlink transmission, or the terminal may receive a downlink transmission but cannot perform an uplink transmission. A symbol that includes uplink and downlink subbands at the same time in the frequency domain may be referred to as an SBFD symbol. Optionally, in a case that a part of symbols in a slot are configured as SBFD symbols, the slot may be referred to as an SBFD slot. Optionally, in a case that all symbols in a slot are configured as SBFD symbols, the slot may be referred to as an SBFD slot.

FIG. 2 is a schematic diagram showing an SBFD slot according to an embodiment of the present disclosure.

An example in which an SBFD slot includes a slot configured with an uplink subband is used in the following description. As shown in FIG. 2, among five slots (slot #0 to slot #4), the network device configures uplink subbands for a terminal in slot #1 to slot #3. Therefore, slot #1 to slot #3 may be referred to as SBFD slots. The slot #0 is a downlink slot, and the slot 4 is an uplink slot, and slot #0 and slot #4 may be referred to as non-SBFD slots.

In a frequency domain resource corresponding to a slot configured with an uplink subband, a downlink resource outside the uplink subband may be referred to as a downlink subband. A Guard Band (GB) may be set between an uplink subband and a downlink subband for frequency domain isolation between the uplink subband and the downlink subband.

In a case that the network device performs PDSCH transmissions to a terminal in multiple slots, some PDSCHs are located in non-SBFD slots and some PDSCHs are located in SBFD slots. Thus, there may be a conflict between a first frequency domain resource configured for the PDSCH and an uplink subband in an SBFD slot.

Among multiple symbols included in an SBFD slot, the uplink subband may be configured on all or part of the symbols. A symbol configured with a subband (such as an uplink subband) may be referred to as an SBFD symbol, and a symbol not configured with a subband (such as an uplink subband) may be referred to as a non-SBFD symbol. The conflict between the first frequency domain resource configured for the PDSCH and the uplink subband in an SBFD slot may specifically be as follows: the first frequency domain resource configured for PDSCH conflicts with the uplink subband in an SBFD symbol in the SBFD slot.

In a case that the first frequency domain resource configured for the PDSCH conflicts with the uplink subband in an SBFD symbol, in some cases, the terminal determines that the terminal can receive the PDSCH on the SBFD symbol, while the network device determines that the terminal cannot receive the PDSCH on the SBFD symbol. Alternatively, the terminal determines that the terminal cannot receive the PDSCH on the SBFD symbol, but the network device determines that the terminal can receive the PDSCH on the SBFD symbol. Therefore, the terminal and the network device may have different understandings of whether the terminal can receive the PDSCH on the SBFD symbol, which may affect the direct communication connection between the terminal and the network device. Therefore, it is needed to clarify on which type(s) of symbol(s) the terminal can receive the PDSCH.

The symbol(s) in the embodiments of the present disclosure may include Orthogonal Frequency Division Multiplexing (OFDM) symbol(s).

FIG. 3 is a schematic flowchart of a reception determination method according to an embodiment of the present disclosure. The reception determination method shown in this embodiment may be performed by a terminal.

As shown in FIG. 3, the reception determination method may include the following step:

In step S301, a symbol that can be used to receive a Physical Downlink Shared Channel (PDSCH) transmitted in multiple slots is determined according to first information sent by a network device. The symbol includes at least one of: a Subband Full Duplex (SBFD) symbol or a non-SBFD symbol.

It should be noted that the embodiment shown in FIG. 3 may be implemented independently or in combination with at least one other embodiment in the present disclosure. The specific selection may be made as needed and the present disclosure does not limit it.

In an embodiment, the terminal may receive the first information sent by the network device, and may further determine, according to the first information, the symbol that can be used to receive the PDSCH transmitted in the multiple slots. For example, the terminal may be determine that the PDSCH transmitted in the multiple slots can be received only in an SBFD symbol, or the terminal may determine that the PDSCH transmitted in the multiple slots can be received only in a non-SBFD symbol, or the terminal may determine that the PDSCH transmitted in the multiple slots can be received in an SBFD symbol and a non-SBFD symbol. Accordingly, it can be ensured that the symbol(s) determined by the terminal as capable of being used to receive the PDSCH transmitted in the multiple slots is(are) consistent with the understanding of the network device, which is beneficial for ensuring the communication quality between the network device and the terminal.

It should be noted that the embodiments of the present disclosure mainly illustrate the technical solutions in a case that the SBFD symbol is a symbol configured with an uplink subband. However, the technical solutions of the present disclosure may also be applied to a case that the SBFD symbol is a symbol configured with a downlink subband.

In an embodiment, the PDSCH transmitted in multiple slots includes at least one of:
PDSCH repetition(s);
Semi-Persistent Scheduling (SPS) PDSCH;
Multiple PDSCHs scheduled by single Downlink Control Information (DCI), which may be referred to as multiple PDSCHs scheduled by single DCI.

The SPS PDSCH may further include SPS PDSCH with repetition and SPS PDSCH without repetition.

For SPS PDSCH with repetition, the network device may send multiple PDSCHs in SPS resources. Each PDSCH may be repeatedly transmitted. The repetitions of a PDSCH may be called a group. In an embodiment, the PDSCH transmitted in multiple slots may include PDSCH(s) in one group in the SPS PDSCH with repetition, or include PDSCHs in all groups in the SPS PDSCH with repetition.

In an embodiment, the first information includes at least one of: frequency domain resource information; or an indication field.

The network device indicates to the terminal, through the first information, a symbol that can be used to receive the PDSCH transmitted in multiple slots. The indication scheme includes but is not limited to: explicit indication and implicit indication.

For example, in a case of using an explicit indication scheme, the first information sent by the network device may include an indication field. The indication field may be a newly added field in signaling, or the indication field may reuse an existing field in signaling (e.g., a field formed by reserved bit(s)). The signaling includes at least one of the following: Radio Resource Control (RRC) signaling, DCI, or Media Access Control Control Element (MAC CE). Upon receiving the indication field in the signaling according to the indication, the terminal may determine the symbol indicated by the network device that can be used to receive the PDSCH transmitted in multiple slots.

For example, in a case of using an implicit indication scheme, the first information sent by the network device may include frequency domain resource information. The terminal may determine a frequency domain resource configured for the PDSCH transmitted in multiple slots according to the frequency domain resource information, and further determine the symbol indicated by the network device that can be used for receiving the PDSCH transmitted in multiple slots according to a relationship between the frequency domain resource configured for the PDSCH transmitted in multiple slots and a downlink resource corresponding to an SBFD symbol.

It should be noted that the downlink resource corresponding to the SBFD symbol in the embodiments of the present disclosure may include a downlink subband, or may include a downlink subband and a guard band.

In an embodiment, determining, according to the first information sent by the network device, the symbol that can be used to receive the PDSCH transmitted in the multiple slots includes at least one of:
in a case that the frequency domain resource information sent by the network device configures that a frequency domain resource for the PDSCH is within the downlink resource corresponding to the SBFD symbol, determining that the PDSCH transmitted in the multiple slots can be received on the SBFD symbol and the non-SBFD symbol; or
in a case that the frequency domain resource information sent by the network device configures that the frequency domain resource for the PDSCH includes a frequency domain resource outside the downlink resource corresponding to the SBFD symbol, determining that the PDSCH transmitted in the multiple slots can be received only on the SBFD symbol or the non-SBFD symbol.

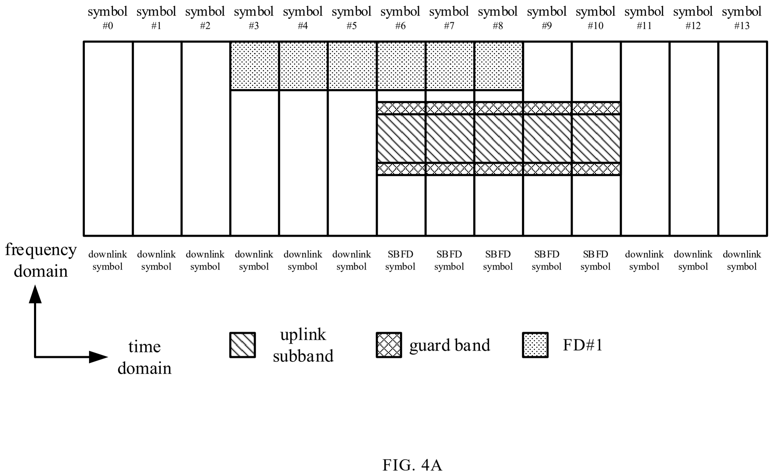

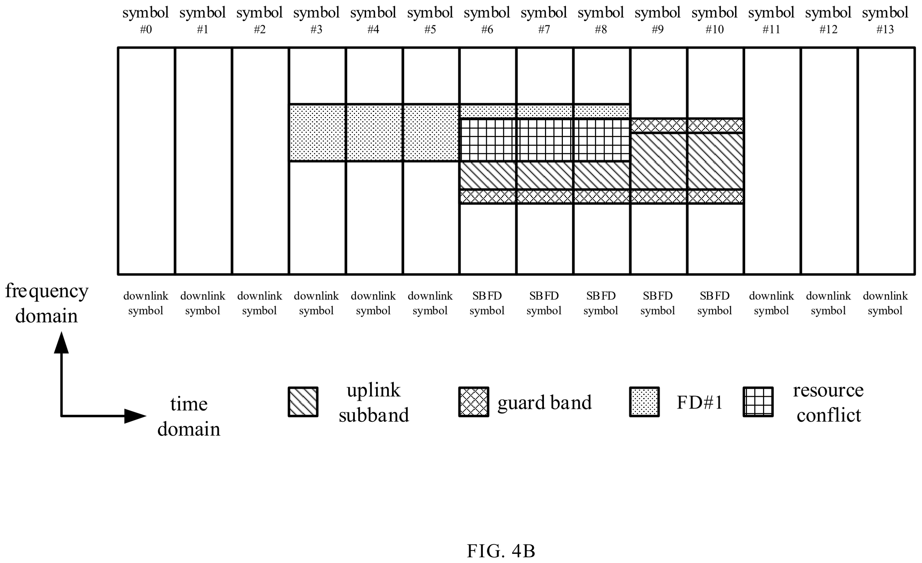

FIG. 4A is a schematic diagram showing a frequency domain resource according to an embodiment of the present disclosure. FIG. 4B is a schematic diagram showing another frequency domain resource according to an embodiment of the present disclosure.

Taking a slot including 14 symbols as an example, uplink subbands are configured on symbols #6 to #10. The symbols that the PDSCH needs to occupy in the SBFD slot include symbols #3 to #8. Among them, symbols #3 to #5 are not configured with an uplink subband and are non-SBFD symbols, while symbols #6 to #8 are SBFD symbols.

As shown in FIG. 4A, the frequency domain resource configured by the network device for PDSCH transmitted in multiple slots is FD#1, and FD#1 is within the downlink resource corresponding to the SBFD symbol (e.g., a downlink subband or a downlink subband and a guard band). According to the frequency domain resource information, the terminal may determine that the frequency domain resource configured for the PDSCH transmitted in multiple slots is FD#1. In a case that the terminal determines that FD#1 is within the downlink resource corresponding to an SBFD symbol, the terminal may determine that the network device indicates that the terminal can receive the PDSCH transmitted in multiple slots on the SBFD symbol and the non-SBFD symbol. For example, the terminal may determine that the network device indicates that the terminal can receive the PDSCH transmitted in multiple slots on symbols #3 to #8.

As shown in FIG. 4B, the frequency domain resource configured by the network device for PDSCH transmitted in multiple slots is FD#1, and FD#1 includes a frequency domain resource outside the downlink resource corresponding to an SBFD symbol. According to the frequency domain resource information, the terminal may determine that the frequency domain resource configured for PDSCH transmitted in multiple slots is FD#1. In a case that the terminal determines that FD#1 includes a frequency domain resource outside the downlink resource corresponding to the SBFD symbol (for example, there is a resource conflict between FD#1 and the frequency domain resource outside the downlink resource in FIG. 4B), it may be determined that the network device indicates that the terminal can receive the PDSCH transmitted in multiple slots only on non-SBFD symbol(s). For example, it may be determined that the PDSCH transmitted in multiple slots can be received only on non-SBFD symbols (symbols #3 to #5).

It should be noted that in a case that FD#1 includes a frequency domain resource outside the downlink resource corresponding to the SBFD symbol, the terminal may also determine that the network device indicates that the terminal can receive the PDSCH transmitted in multiple slots only on an SBFD symbol. For example, symbol(s) where the first PDSCH among the PDSCH(s) transmitted in multiple slots is located includes(include) an SBFD symbol, and the terminal may determine that the PDSCH(s) transmitted in multiple slots can be received only on the SBFD symbol; or, the symbol(s) where the first PDSCH among the PDSCH(s) transmitted in multiple slots is located is(are) all SBFD symbols, and the terminal determines that the PDSCH(s) transmitted in multiple slots can be received only on the SBFD symbols. The first PDSCH refers to a PDSCH transmitted in the first slot among the multiple slots.

In an embodiment, determining that the PDSCH(s) transmitted in multiple slots can be received only on an SBFD symbol or a non-SBFD symbol includes at least one of the following:
symbol(s) where the first PDSCH among PDSCH(s) transmitted in multiple slots is(are) located including an SBFD symbol, determining that the PDSCH(s) transmitted in the multiple slots can be received only on the SBFD symbol;
the symbol(s) where the first PDSCH among the PDSCH(s) transmitted in multiple slots is located being all non-SBFD symbols, determining that the PDSCH(s) transmitted in multiple slots can be received only on the non-SBFD symbol(s).

For example, the terminal may determine a slot where the first PDSCH among PDSCH(s) transmitted in multiple slots is located, and determine symbol(s) where the first PDSCH is located in the slot. In a case that the symbol(s) where the first PDSCH is located in the slot includes(include) an SBFD symbol, the terminal may determine that the PDSCH(s) transmitted in multiple slots can be received only on the SBFD symbol; in a case that the symbol(s) where the first PDSCH is located in the slot is(are) all non-SBFD symbols, the terminal may determine that the PDSCH(s) transmitted in multiple slots can be received only on the non-SBFD symbol(s).

In an embodiment, determining that PDSCH transmitted in multiple slots can be received only on an SBFD symbol or a non-SBFD symbol includes at least one of the following:
symbol(s) where the first PDSCH among the PDSCH(s) transmitted in multiple slots is located being all SBFD symbols, determining that the PDSCH transmitted in multiple slots can be received only on the SBFD symbols;
symbol(s) where the first PDSCH among the PDSCH(s) transmitted in multiple slots is located including a non-SBFD symbol, determining that the PDSCH(s) transmitted in the multiple slots can be received only on the non-SBFD symbol.

For example, the terminal may determine a slot where the first PDSCH among PDSCH(s) transmitted in multiple slots is located, and determine symbol(s) where the first PDSCH is located in the slot. In a case that all the symbol(s) where the first PDSCH is located in the slot is(are) SBFD symbol(s), the terminal may determine that the PDSCH(s) transmitted in multiple slots can be received only on the SBFD symbol(s); in a case that the symbol(s) where the first PDSCH is located in the slot includes(include) a non-SBFD symbol, the terminal may determine that the PDSCH(s) transmitted in multiple slots can be received only on the non-SBFD symbol.

It should be noted that the number of slots where the PDSCH is located shown in the figures is only a local example, and the PDSCH may also be transmitted in slots other than those shown in the figures.

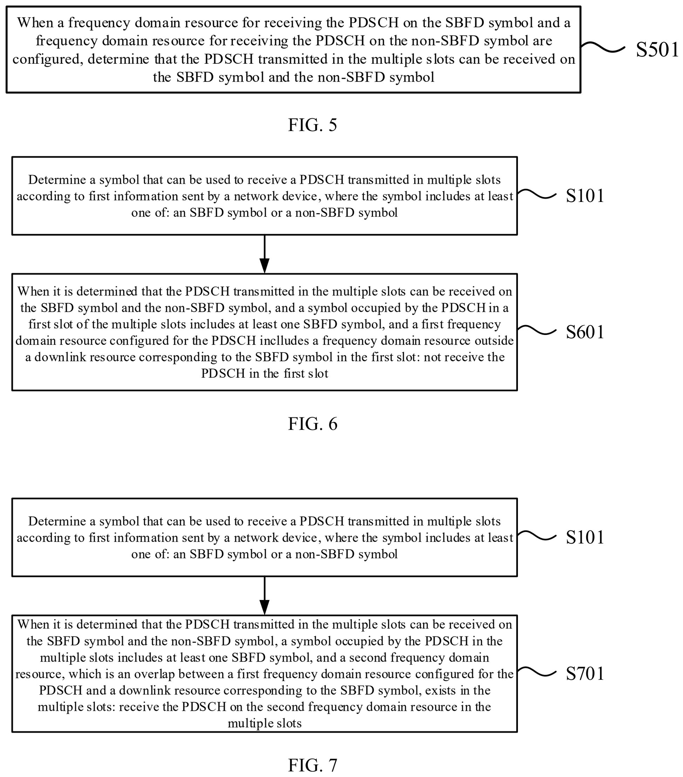

FIG. 5 is a schematic flowchart of another reception determination method according to an embodiment of the present disclosure. The reception determination method shown in this embodiment may be performed by a terminal. As shown in FIG. 5, determining the symbol that can be used to receive the PDSCH transmitted in multiple slots according to the first information sent by the network device includes:

In step S501, in a case that a frequency domain resource for receiving the PDSCH on an SBFD symbol and a frequency domain resource for receiving the PDSCH on a non-SBFD symbol are configured, it is determined that the PDSCH transmitted in multiple slots can be received on the SBFD symbol and the non-SBFD symbol.

It should be noted that the embodiment shown in FIG. 5 may be implemented independently or in combination with at least one other embodiment in the present disclosure. The specific selection may be made as needed and the present disclosure does not limit it.

In an embodiment, the first information sent by the network device may include frequency domain resource information, and the frequency domain resource information may configure a frequency domain resource for receiving the PDSCH on an SBFD symbol and a frequency domain resource for receiving the PDSCH on a non-SBFD symbol, where the frequency domain resource for receiving the PDSCH on the SBFD symbol does not include a frequency domain resource outside a downlink resource corresponding to the SBFD symbol.

In this case, the terminal may determine, according to the frequency domain resource information, that the frequency domain resource for receiving the PDSCH on an SBFD symbol and the frequency domain resource for receiving the PDSCH on a non-SBFD symbol are configured, and further determine that the PDSCH transmitted in multiple slots can be received on the SBFD symbol and the non-SBFD symbol.

For example, in non-SBFD symbols, the PDSCH may be received on a frequency domain resource used for receiving the PDSCH on the non-SBFD symbols, and in SBFD symbols, the PDSCH may be received on a frequency domain resource used for receiving the PDSCH on the SBFD symbols.

In an embodiment, the indication field occupies 1 bit or 2 bits. It should be noted that the number of bit(s) occupied by the indication field is not limited to 1 or 2, and may also be other numbers. The following embodiments mainly illustrate the technical solutions of the present disclosure using cases that the indication field occupies 1 bit and the indication field occupies 2 bits.

In an embodiment, determining, according to the first information sent by the network device, the symbol that can be used to receive the PDSCH transmitted in multiple slots includes at least one of the following:
in a case that the indication field indicates that the PDSCH transmitted in multiple slots can be received on an SBFD symbol and a non-SBFD symbol, determining that the PDSCH transmitted in multiple slots can be received on the SBFD symbol and the non-SBFD symbol;
in a case that the indication field indicates that the PDSCH transmitted in multiple slots can be received only on an SBFD symbol or a non-SBFD symbol, determining that the PDSCH transmitted in multiple slots can be received only on the SBFD symbol or the non-SBFD symbol.

In an embodiment, in a case that the indication field occupies 1 bit, the indication field may indicate that the PDSCH transmitted in multiple slots can be received on an SBFD symbol and a non-SBFD symbol, or indicate that the PDSCH transmitted in multiple slots can be received only on an SBFD symbol or a non-SBFD symbol.

For example, in a case that a value of 1 bit occupied by the indication field is 1, it indicates that the PDSCH transmitted in multiple slots can be received on an SBFD symbol and a non-SBFD symbol. In a case that the terminal determines that the value of the 1 bit occupied by the indication field is 1, the terminal may determine that the PDSCH transmitted in multiple slots can be received on an SBFD symbol and a non-SBFD symbol.

For example, in a case that the value of the 1 bit occupied by the indication field is 0, the PDSCH transmitted in multiple slots can be received only on an SBFD symbol or a non-SBFD symbol. In a case that the terminal determines that the value of the 1 bit occupied by the indication field is 0, the terminal may determine that the PDSCH transmitted in multiple slots can be received only on an SBFD symbol or a non-SBFD symbol.

In an embodiment, determining that the PDSCH transmitted in multiple slots can be received only on the SBFD symbol or the non-SBFD symbol includes at least one of the following:
symbol(s) where the first PDSCH among PDSCH(s) transmitted in multiple slots is located including an SBFD symbol, determining that the PDSCH(s) transmitted in the multiple slots can be received only on the SBFD symbol;
symbol(s) where the first PDSCH among the PDSCH(s) transmitted in multiple slots is located being all non-SBFD symbols, determining that the PDSCH(s) transmitted in multiple slots can be received only on non-SBFD symbols.

For example, the terminal may determine a slot where the first PDSCH among PDSCH(s) transmitted in multiple slots is located, and determine the symbol(s) where the first PDSCH is located in the slot. In a case that the symbol(s) where the first PDSCH is located in the slot includes(include) an SBFD symbol, the terminal may determine that the PDSCH(s) transmitted in multiple slots can be received only on the SBFD symbol; in a case that the symbol(s) where the first PDSCH is located in the slot is(are) all non-SBFD symbols, the terminal may determine that the PDSCH(s) transmitted in multiple slots can be received only on the non-SBFD symbols.

In an embodiment, determining that the PDSCH transmitted in multiple slots can be received only on the SBFD symbol or the non-SBFD symbol includes at least one of the following:
symbol(s) where the first PDSCH among the PDSCH(s) transmitted in multiple slots is located being all SBFD symbols, determining that the PDSCH(s) transmitted in multiple slots can be received only on SBFD symbols;
symbol(s) where the first PDSCH among the PDSCH(s) transmitted in multiple slots is located including a non-SBFD symbol, determining that the PDSCH(s) transmitted in the multiple slots can be received only on the non-SBFD symbol.

For example, the terminal may determine a slot where the first PDSCH among PDSCH(s) transmitted in multiple slots is located, and determine the symbol(s) where the first PDSCH is located in the slot. In a case that all the symbol(s) where the first PDSCH is located in the slot is(are) SBFD symbols, the terminal may determine that the PDSCH(s) transmitted in multiple slots can be received only on SBFD symbols; in a case that the symbol(s) where the first PDSCH is located in the slot includes(include) a non-SBFD symbol, the terminal may determine that the PDSCH(s) transmitted in multiple slots can be received only on the non-SBFD symbol.

In an embodiment, determining that the PDSCH transmitted in multiple slots can be received only on the SBFD symbol or the non-SBFD symbol includes at least one of the following:
symbol(s) where the first PDSCH among the PDSCH(s) transmitted in multiple slots is located being all SBFD symbols, determining that the PDSCH(s) transmitted in multiple slots can be received only on SBFD symbols;
symbol(s) where the first PDSCH among the PDSCH(s) transmitted in multiple slots is located being all non-SBFD symbols, determining that the PDSCH(s) transmitted in multiple slots can be received only on the non-SBFD symbols.

For example, the terminal may determine a slot where the first PDSCH among PDSCH(s) transmitted in multiple slots is located, and determine the symbol(s) where the first PDSCH is located in the slot. In a case that all the symbol(s) where the first PDSCH is located in the slot is(are) SBFD symbol(s), the terminal may determine that the PDSCH(s) transmitted in multiple slots can be received only on the SBFD symbol(s); in a case that all the symbol(s) where the first PDSCH is located in the slot is(are) non-SBFD symbol(s), the terminal may determine that the PDSCH(s) transmitted in multiple slots can be received only on non-SBFD symbol(s).

In an embodiment, determining, according to the first information sent by the network device, the symbol that can be used to receive the PDSCH transmitted in multiple slots includes at least one of the following:
in a case that the indication field takes a first value, or a second value, or the indication field is empty to indicate that the PDSCH transmitted in multiple slots can be received only on an SBFD symbol, determining that the PDSCH transmitted in multiple slots can be received only on the SBFD symbol;
in a case that the indication field takes the first value, or the second value, or the indication field is empty to indicate that the PDSCH transmitted in multiple slots can be received only on a non-SBFD symbol, determining that the PDSCH transmitted in multiple slots can be received only on the non-SBFD symbol;
in a case that the indication field takes the first value, or the second value or the field is empty to indicate that PDSCH transmitted in multiple slots can be received on an SBFD symbol and a non-SBFD symbol, determining that PDSCH transmitted in multiple slots can be received on the SBFD symbol and the non-SBFD symbol.

It can be understood that in a case that the indication field takes the first value or the second value and in a case that the indication field is empty, the content indicated by the first information is different. The following illustratively describes, through several embodiments, the content indicated by the first information in a case that the indication field takes the first value or the second value and in a case that the indication field is empty. However, the correspondence relationship between the content indicated by the first information and the indication field taking the first value, the second value, and the indication field being empty is not limited to the following embodiments.

In an embodiment, in a case that the indication field occupies 1 bit, the indication field may indicate that the PDSCH transmitted in multiple slots can be received only on an SBFD symbol, or indicate that the PDSCH transmitted in multiple slots can be received only on an non-SBFD symbol. In a case that the indication field is empty, it may indicate that the PDSCH transmitted in multiple slots can be received on an SBFD symbol and a non-SBFD symbol.

For example, in a case that the value of the 1 bit occupied by the indication field is 1, it indicates that the PDSCH transmitted in multiple slots can be received only on an SBFD symbol. In a case that the terminal determines that the value of the 1 bit occupied by the indication field is 1, the terminal may determine that the PDSCH transmitted in multiple slots can be received only on an SBFD symbol.

For example, in a case that the value of the 1 bit occupied by the indication field is 0, it indicates that the PDSCH transmitted in multiple slots can be received only on a non-SBFD symbol. In a case that the terminal determines that the value of the 1 bit occupied by the indication field is 0, the terminal may determine that the PDSCH transmitted in multiple slots can be received only on a non-SBFD symbol.

For example, in a case that the terminal determines that the indication field is empty, the terminal may determine that the PDSCH transmitted in multiple slots can be received on an SBFD symbol and a non-SBFD symbol.

In an embodiment, in a case that the indication field occupies 1 bit, the indication field may indicate that the PDSCH transmitted in multiple slots can be received only on an SBFD symbol, or indicate that the PDSCH transmitted in multiple slots can be received on an SBFD symbol and a non-SBFD symbol. In a case that the indication field is empty, it may indicate that the PDSCH transmitted in multiple slots can be received only on a non-SBFD symbol.

For example, in a case that the value of the 1 bit occupied by the indication field is 1, it indicates that the PDSCH transmitted in multiple slots can be received only on an SBFD symbol. In a case that the terminal determines that the value of the 1 bit occupied by the indication field is 1, the terminal may determine that the PDSCH transmitted in multiple slots can be received only on an SBFD symbol.

For example, in a case that the value of the 1 bit occupied by the indication field is 0, it indicates that the PDSCH transmitted in multiple slots can be received on an SBFD symbol and a non-SBFD symbol. In a case that the terminal determines that the value of the 1 bit occupied by the indication field is 0, the terminal may determine that the PDSCH transmitted in multiple slots can be received on an SBFD symbol and a non-SBFD symbol.

For example, in a case that the terminal determines that the indication field is empty, it may determine that the PDSCH transmitted in multiple slots can be received only on a non-SBFD symbol.

In an embodiment, in a case that the indication field occupies 1 bit, the indication field may indicate that the PDSCH transmitted in multiple slots can be received on an SBFD symbol and a non-SBFD symbol, or indicate that the PDSCH transmitted in multiple slots can be received only on a non-SBFD symbol. In a case that the indication field is empty, it may indicate that the PDSCH transmitted in multiple slots can be received only on an SBFD symbol.

For example, in a case that the value of the 1 bit occupied by the indication field is 1, it indicates that the PDSCH transmitted in multiple slots can be received on an SBFD symbol and a non-SBFD symbol. In a case that the terminal determines that the value of the 1 bit occupied by the indication field is 1, the terminal may determine that the PDSCH transmitted in multiple slots can be received on an SBFD symbol and a non-SBFD symbol.

For example, in a case that the value of the 1 bit occupied by the indication field is 0, it indicates that the PDSCH transmitted in multiple slots can be received only on a non-SBFD symbol. In a case that the terminal determines that the value of the 1 bit occupied by the indication field is 0, the terminal may determine that the PDSCH transmitted in multiple slots can be received only on a non-SBFD symbol.

For example, in a case that the terminal determines that the indication field is empty, the terminal may determine that the PDSCH transmitted in multiple slots can be received only on an SBFD symbol.

In an embodiment, determining, according to the first information sent by the network device, the symbol that can be used to receive the PDSCH transmitted in multiple slots includes at least one of the following:
in a case that the indication field indicates that the PDSCH transmitted in multiple slots can be received on an SBFD symbol and a non-SBFD symbol, determining that the PDSCH transmitted in multiple slots can be received on the SBFD symbol and the non-SBFD symbol;
in a case that the indication field indicates that the PDSCH transmitted in the multiple slots can be received only on an SBFD symbol, determining that the PDSCH transmitted in the multiple slots can be received only on the SBFD symbol;
in a case that the indication field indicates that the PDSCH transmitted in the multiple slots can be received only on a non-SBFD symbols, determining that the PDSCH transmitted in the multiple slots can be received only on the non-SBFD symbol.

In an embodiment, in a case that the indication field occupies 2 bits, the indication field may indicate that the PDSCH transmitted in multiple slots can be received on an SBFD symbol and a non-SBFD symbol, or indicate that the PDSCH transmitted in multiple slots can be received only on a non-SBFD symbol, or indicate that the PDSCH transmitted in multiple slots can be received only on an SBFD symbol.

For example, in a case that the value of the 2 bits occupied by the indication field is 00, it indicates that the PDSCH transmitted in multiple slots can be received on an SBFD symbol and a non-SBFD symbol. In a case that the terminal determines that the value of the 2 bits occupied by the indication field is 00, the terminal may determine that the PDSCH transmitted in multiple slots can be received on an SBFD symbol and a non-SBFD symbol.

For example, in a case that the value of the 2 bits occupied by the indication field is 01, it indicates that the PDSCH transmitted in multiple slots can be received only on an SBFD symbol. In a case that the terminal determines that the value of the 2 bits occupied by the indication field is 01, the terminal may determine that the PDSCH transmitted in multiple slots can be received only on an SBFD symbol.

For example, in a case that the value of the 2 bits occupied by the indication field is 10, it indicates that the PDSCH transmitted in multiple slots can be received only on a non-SBFD symbol. In a case that the terminal determines that the value of the 2 bits occupied by the indication field is 10, the terminal may determine that the PDSCH transmitted in multiple slots can be received only on a non-SBFD symbol.

It should be noted that expression that the PDSCH transmitted in multiple slots can be received on a certain type of symbol in the embodiments of the present disclosure does not mean that the terminal must receive PDSCH transmitted in multiple slots on this type of symbol, but means that the terminal may receive the PDSCH transmitted in multiple slots on this type of symbol and cannot receive the PDSCH transmitted in multiple slots on symbols other than this type of symbol.

For example, the terminal determining that the terminal can receive the PDSCH transmitted in multiple slots on an SBFD symbol and a non-SBFD symbol means that: the terminal may receive the PDSCH transmitted in multiple slots on an SBFD symbol and a non-SBFD symbol in each slot where the PDSCH is located. This does not mean that the terminal needs to receive the PDSCH transmitted in multiple slots on an SBFD symbol and a non-SBFD symbol in each slot where the PDSCH is located.

For example, the terminal determining that the terminal can receive the PDSCH transmitted in multiple slots only on an SBFD symbol means that: in each slot where the PDSCH is located, the terminal may receive the PDSCH transmitted in multiple slots on an SBFD symbol, but cannot receive the PDSCH transmitted in multiple slots on a non-SBFD symbol. This does not mean that the terminal needs to receive the PDSCH transmitted in multiple slots on an SBFD symbol in each slot where the PDSCH is located.

For example, the terminal determining that the terminal can receive the PDSCH transmitted in multiple slots only on a non-SBFD symbol means that: in each slot where the PDSCH is located, the terminal may receive the PDSCH transmitted in multiple slots on a non-SBFD symbol, but cannot receive the PDSCH transmitted in multiple slots on an SBFD symbol. This does not mean that the terminal needs to receive the PDSCH transmitted in multiple slots on a non-SBFD symbol in each slot where the PDSCH is located.

Regarding on which symbol(s) to receive the PDSCH transmitted in multiple slots by the terminal in each slot where the PDSCH is located, further determination is needed. The specific determination scheme will be illustrated in subsequent embodiments.

In an embodiment, the reception determination method further includes: in a case that it is determined that the PDSCH transmitted in multiple slots can be received on the SBFD symbol and the non-SBFD symbol and a symbol occupied by the PDSCH in multiple slots does not include an SBFD symbol: receiving the PDSCH on a first frequency domain resource configured for the PDSCH in multiple slots.

In a case of determining that the terminal can receive the PDSCH transmitted in multiple slots on the SBFD symbol and the non-SBFD symbol, the terminal may further determine whether the symbol(s) occupied by the PDSCH in multiple slots includes(include) an SBFD symbol.

In a case that the symbol(s) occupied by the PDSCH in multiple slots does(do) not include an SBFD symbol, in a case that the terminal performs, in multiple slots, reception of the PDSCH transmitted in multiple slots, the situation that the PDSCH is received on an SBFD symbol will not occur. Thus, the first resource FD#1 configured for the PDSCH in multiple slots does not conflict with a frequency domain resource outside the downlink resource. Therefore, the PDSCH may be received on FD#1 in multiple slots. Correspondingly, the network device may send the PDSCH transmitted in multiple slots to the terminal on FD#1 in multiple slots.

FIG. 6 is a schematic flowchart of another reception determination method according to an embodiment of the present disclosure. The reception determination method shown in this embodiment may be performed by a terminal. As shown in FIG. 6, the reception determination method further includes:

In step S601, in a case that it is determined that the PDSCH transmitted in multiple slots can be received on an SBFD symbol and a non-SBFD symbol, and a symbol occupied by the PDSCH in a first slot of the multiple slots includes at least one SBFD symbol, and a first frequency domain resource configured for the PDSCH in the first slot includes a frequency domain resource outside a downlink resource corresponding to the SBFD symbol, the PDSCH is not received in the first slot.

It should be noted that the embodiment shown in FIG. 6 may be implemented independently or in combination with at least one other embodiment of the present disclosure. The specific selection may be made as needed and is not limited by the present disclosure. In addition, the first frequency domain resource configured for the PDSCH transmitted in multiple slots may be the same in each slot. The first slot may refer to any slot among the multiple slots.

In an embodiment, the reception determination method further includes: in a case that it is determined that the PDSCH transmitted in multiple slots can be received on the SBFD symbol and the non-SBFD symbol, and the first frequency domain resource configured for the PDSCH in the first slot of the multiple slots is located within the downlink resource corresponding to the SBFD symbol: receiving the PDSCH in the first slot.

In an embodiment, in a case that the terminal determines that the terminal can receive the PDSCH transmitted in multiple slots on the SBFD symbol and the non-SBFD symbol, the terminal may further determine whether the first frequency domain resource FD#1 configured for the PDSCH in the first slot of the multiple slots includes a frequency domain resource outside the downlink resource corresponding to the SBFD symbol.

In a case that FD#1 includes a frequency domain resource outside the downlink resource corresponding to the SBFD symbol, that is, FD#1 is not within the downlink resource corresponding to the SBFD symbol, in a case that the terminal performs reception of the PDSCH transmitted in multiple slots on the SBFD symbol in the first slot, FD#1 will conflict with the frequency domain resource outside the downlink resource. Therefore, the PDSCH transmitted in multiple slots may not be received in the first slot. Correspondingly, the network device may not send the multi-slot transmissions of the PDSCH to the terminal in the first slot.

In a case that FD#1 does not include a frequency domain resource outside the downlink resource corresponding to the SBFD symbol, that is, FD#1 is within the downlink resource corresponding to the SBFD symbol, in a case that the terminal performs reception of the PDSCH transmitted in multiple slots on the SBFD symbol in the first slot, there is no conflict between FD#1 and the frequency domain resource outside the downlink resource, and thus the PDSCH can be received in the first slot. Correspondingly, the network device can send the PDSCH transmitted in multiple slots to the terminal in the first slot.

In an embodiment, the reception determination method further includes: a symbol occupied by the PDSCH in a first slot of the multiple slots including an uplink symbol, not receiving the PDSCH in the first slot. This embodiment may be combined with any other embodiment in the present disclosure.

Regardless of whether the terminal determines that it can receive the PDSCH transmitted in multiple slots on an SBFD symbol and a non-SBFD symbol, determines that it can receive the PDSCH transmitted in multiple slots only on an SBFD symbol, or determines that it can receive the PDSCH transmitted in multiple slots only on a non-SBFD symbol, the terminal may determine whether a symbol occupied by the PDSCH in the first slot of the multiple slots used for receiving the PDSCH includes an uplink symbol. In a case that it is determined that the symbol occupied by the PDSCH in the first slot includes an uplink symbol, FD#1 will conflict with the frequency domain resource outside the downlink resource, and therefore the PDSCH may not be received in the first slot. Correspondingly, the network device may not send the multi-slot transmissions of the PDSCH to the terminal in the first slot.

FIG. 7 is a schematic flowchart of another reception determination method according to an embodiment of the present disclosure. The reception determination method in this embodiment may be performed by a terminal. As shown in FIG. 7, the reception determination method further includes:

In step S701, in a case that it is determined that the PDSCH transmitted in multiple slots can be received on an SBFD symbol and a non-SBFD symbol, a symbol occupied by the PDSCH in multiple slots includes at least one SBFD symbol, and a second frequency domain resource which is an overlap between a first frequency domain resource configured for the PDSCH and a downlink resource corresponding to the SBFD symbol exists in the multiple slots, the PDSCH is received on the second frequency domain resource in the multiple slots.

It should be noted that the embodiment in FIG. 7 may be implemented independently or in combination with at least one other embodiment of the present disclosure. The specific selection may be made as needed and the present disclosure does not limit it. This embodiment may be applied to a case that the first information is based on an explicit indication.

In an embodiment, in a case that the terminal determines that it can receive PDSCH transmitted in multiple slots on an SBFD symbol and a non-SBFD symbol, the terminal may further determine whether there is an overlapping second frequency domain resource FD#2 between the first frequency domain resource FD#1 configured for the PDSCH and the downlink resource corresponding to the SBFD symbol in multiple slots.

In a case that there is an overlapping second frequency domain resource FD#2 between FD#1 and the downlink resource corresponding to the SBFD symbol, the terminal may perform reception, in multiple slots for receiving the PDSCH, of the PDSCH transmitted in multiple slots on FD#2.

Because FD#2 is located within the downlink resource corresponding to the SBFD symbol, receiving the PDSCH transmitted in multiple slots on FD#2 ensures that the frequency domain resource for receiving the PDSCH does not conflict with frequency domain resource outside the downlink resource on an SBFD symbol in each slot. Accordingly, the network device may send the PDSCH transmitted in multiple slots to the terminal only on FD#2.

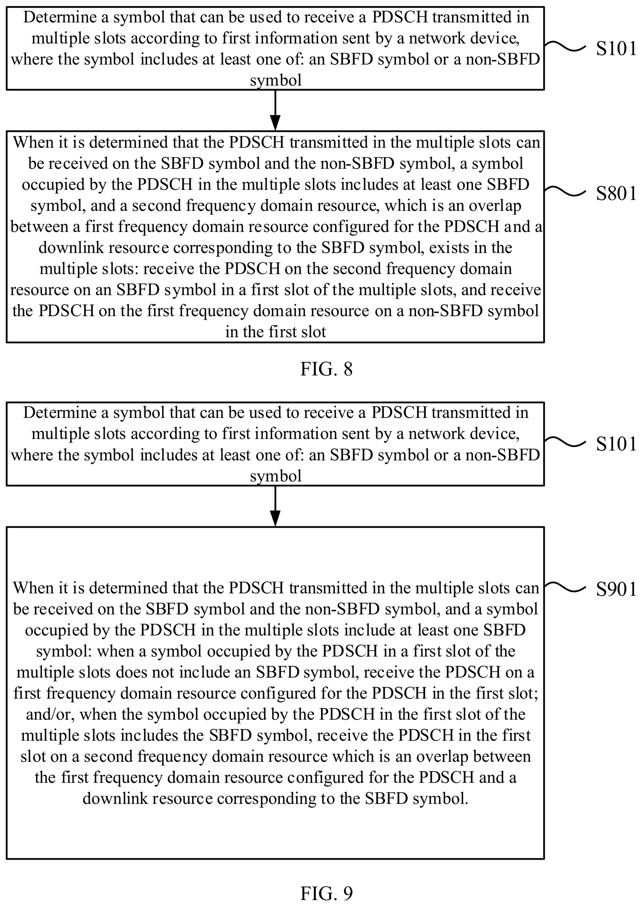

FIG. 8 is a schematic flowchart of another reception determination method according to an embodiment of the present disclosure. The reception determination method in this embodiment may be performed by a terminal. As shown in FIG. 8, the reception determination method further includes:

In step S801, in a case that it is determined that the PDSCH transmitted in multiple slots can be received on an SBFD symbol and a non-SBFD symbol, a symbol occupied by the PDSCH in multiple slots includes at least one SBFD symbol, and a second frequency domain resource which is an overlap between a first frequency domain resource configured for the PDSCH and a downlink resource corresponding to the SBFD symbol exists in the multiple slots, the PDSCH is received on the second frequency domain resource on the SBFD symbol in a first slot of the multiple slots, and the PDSCH is received on the first frequency domain resource on the non-SBFD symbol in the first slot.

It should be noted that the embodiment in FIG. 8 may be implemented independently or in combination with at least one other embodiment in the present disclosure. The specific selection may be made as needed and the present disclosure does not limit it.

In an embodiment, in a case that the terminal determines that it can receive the PDSCH transmitted in multiple slots on an SBFD symbol and a non-SBFD symbol, the terminal may further determine whether there is an overlapping second frequency domain resource FD#2 between the first frequency domain resource FD#1 configured for the PDSCH and the downlink resource corresponding to the SBFD symbol in the first slot of the multiple slots.

In a case that there is an overlapping second frequency domain resource FD#2 between the FD#1 and the downlink resource corresponding to the SBFD symbol, the terminal may receive the PDSCH transmitted in multiple slots on FD#2 on the SBFD symbol in the first slot, and may receive the PDSCH transmitted in multiple slots on FD#1 on the non-SBFD symbol in the first slot.

Since FD#2 is within the downlink resource corresponding to the SBFD symbol, receiving the PDSCH transmitted in multiple slots on FD#2 on the SBFD symbol ensures that the frequency domain resource for receiving the PDSCH on the SBFD symbol does not conflict with a frequency domain resource outside the downlink resource in each slot. However, since there are no frequency domain resource outside the downlink resource on the non-SBFD symbol, receiving the PDSCH transmitted in multiple slots on FD#1 on the non-SBFD symbol does not conflict with a frequency domain resource outside the downlink resource, and helps ensure that frequency domain resource are fully utilized. Correspondingly, the network device may send the PDSCH transmitted in multiple slots to the terminal only on FD#2 on the SBFD symbol in the first slot, and may send the PDSCH transmitted in multiple slots to the terminal on FD#1 on the non-SBFD symbol in the first slot.

FIG. 9 is a schematic flowchart of another reception determination method according to an embodiment of the present disclosure. The reception determination method in this embodiment may be performed by a terminal. As shown in FIG. 9, the reception determination method further includes:

In step S901, in a case that it is determined that the PDSCH transmitted in multiple slots can be received on an SBFD symbol and a non-SBFD symbol and a symbol occupied by the PDSCH in multiple slots includes at least one SBFD symbol, in a case that a symbol occupied by the PDSCH in a first slot of the multiple slots does not include an SBFD symbol, the PDSCH is received on a first frequency domain resource configured for the PDSCH in the first slot; and/or, in a case that the symbol occupied by the PDSCH in the first slot of the multiple slots includes an SBFD symbol, the PDSCH is received on a second frequency domain resource which is an overlap between a first frequency domain resource configured for the PDSCH and a downlink resource corresponding to the SBFD symbol in the first slot.

It should be noted that the embodiment in FIG. 9 may be implemented independently or in combination with at least one other embodiment in the present disclosure. The specific selection may be made as needed and the present disclosure does not limit it.

In an embodiment, in a case that the terminal determines that it can receive the PDSCH transmitted in multiple slots on an SBFD symbol and a non-SBFD symbol, and a symbol occupied by PDSCH in multiple slots includes at least one SBFD symbol, the terminal may further determine whether a symbol occupied by the PDSCH in a first slot of the multiple slots includes an SBFD symbol.

For example, in a case that it is determined that the symbol occupied by PDSCH in the first slot does not include an SBFD symbol, the first frequency domain resource configured for the PDSCH will not conflict with a frequency domain resource outside the downlink resource in the first slot, and thus the terminal can may receive the PDSCH on the first frequency domain resource configured for the PDSCH in the first slot.

For example, in a case that it is determined that the symbol occupied by the PDSCH in the first slot includes an SBFD symbol, the terminal may further determine the second frequency domain resource which is an overlap between the first frequency domain resource configured for the PDSCH and the downlink resource corresponding to the SBFD symbol in the first slot. Since the second frequency domain resource is within the downlink resource corresponding to the SBFD symbol and will not conflict with a frequency domain resource outside the downlink resource, the terminal may receive the PDSCH on the second frequency domain resource in the first slot.

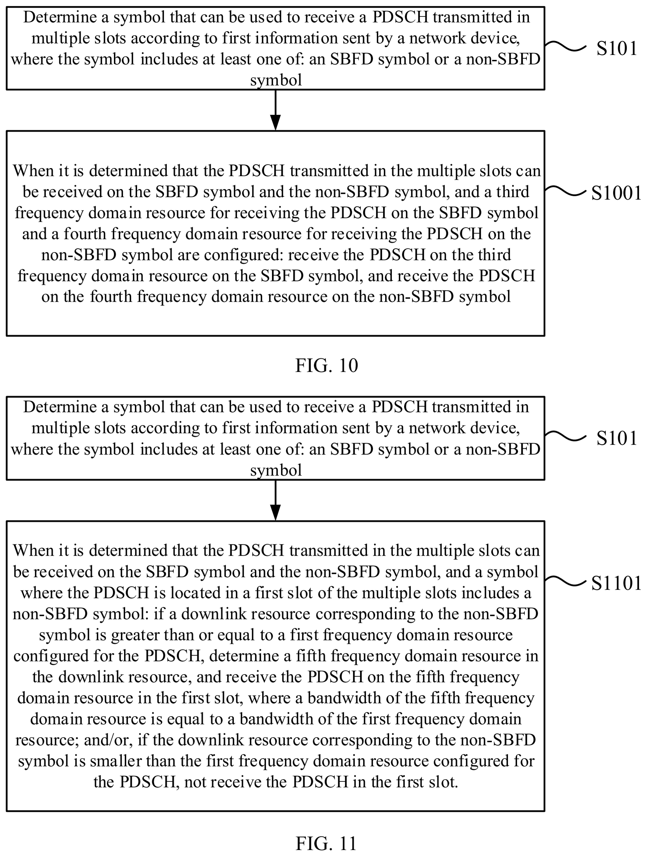

FIG. 10 is a schematic flowchart of another reception determination method according to an embodiment of the present disclosure. The reception determination method in this embodiment may be performed by a terminal. As shown in FIG. 10, the reception determination method further includes:

In step S1001, in a case that it is determined that the PDSCH transmitted in multiple slots can be received on an SBFD symbol and a non-SBFD symbol, and a third frequency domain resource for receiving the PDSCH on an SBFD symbol and a fourth frequency domain resource for receiving the PDSCH on a non-SBFD symbol are configured, the PDSCH is received on the third frequency domain resource on the SBFD symbol, and the PDSCH is received on the fourth frequency domain resource on the non-SBFD symbol.

It should be noted that the embodiment in FIG. 10 may be implemented independently or in combination with at least one other embodiment in the present disclosure. The specific selection may be made as needed and the present disclosure does not limit it.

In an embodiment, in a case that the terminal determines that it can receive the PDSCH transmitted in multiple slots on an SBFD symbol and a non-SBFD symbol, and a symbol occupied by the PDSCH in multiple slots includes at least one SBFD symbol, the terminal may further determine whether the network device configures a third frequency domain resource for receiving the PDSCH on an SBFD symbol and a fourth frequency domain resource for receiving the PDSCH on a non-SBFD symbol. The third frequency domain resource does not include a frequency domain resource outside the downlink resource corresponding to the SBFD symbol.

In a case that it is determined that the network device configures the third frequency domain resource for receiving the PDSCH on the SBFD symbol and the fourth frequency domain resource for receiving the PDSCH on the non-SBFD symbol, since the third frequency domain resource does not include a frequency domain resource outside the downlink resource corresponding to the SBFD symbol, the third frequency domain resource will not conflict with the frequency domain resource outside the downlink resource. Therefore, on the SBFD symbol occupied by the PDSCH in the multiple slots used to transmit the PDSCH, the PDSCH transmitted in multiple slots may be received on the third frequency domain resource. Correspondingly, the network device may send the PDSCH transmitted in multiple slots to the terminal on the third frequency domain resource on the SBFD symbol occupied by the PDSCH in the multiple slots used to transmit the PDSCH.

Since there is no frequency domain resource outside the downlink resource on the non-SBFD symbol, the fourth frequency domain resource will not conflict with the frequency domain resource outside the downlink resource. Therefore, the PDSCH may be received on the fourth frequency domain resource on the non-SBFD symbol occupied by the PDSCH in the multiple slots used to transmit the PDSCH. Correspondingly, the network device may send the PDSCH transmitted in multiple slots to the terminal on the fourth frequency domain resource on the non-SBFD symbol occupied by the PDSCH in the multiple slots used to transmit the PDSCH.

FIG. 11 is a schematic flowchart of another reception determination method according to an embodiment of the present disclosure. The reception determination method in this embodiment may be performed by a terminal. As shown in FIG. 11, the reception determination method further includes:

In step S1101, in a case that it is determined that the PDSCH transmitted in multiple slots can be received on an SBFD symbol and a non-SBFD symbol, and a symbol where the PDSCH is located in a first slot of the multiple slots includes a non-SBFD symbol, in a case that a downlink resource corresponding to the non-SBFD symbol is greater than or equal to the first frequency domain resource configured for the PDSCH, a fifth frequency domain resource is determined in the downlink resource, and the PDSCH is received on the fifth frequency domain resource in the first slot, where a bandwidth of the fifth frequency domain resource is equal to a bandwidth of the first frequency domain resource; and/or, in a case that the downlink resource corresponding to the non-SBFD symbol is less than the first frequency domain resource configured for the PDSCH, the PDSCH is not received in the first slot.

It should be noted that the embodiment in FIG. 11 may be implemented independently or in combination with at least one other embodiment in the present disclosure. The specific selection may be made as needed and the present disclosure does not limit it.

In an embodiment, in a case that the terminal determines that it can receive the PDSCH transmitted in multiple slots on an SBFD symbol and a non-SBFD symbol, and a symbol where the PDSCH is located in a first slot of the multiple slots includes a non-SBFD symbol, the terminal may further determine a relationship between the downlink resource corresponding to the non-SBFD symbol and the first frequency domain resource configured for the PDSCH.

In a case that the downlink resource corresponding to the non-SBFD symbol is greater than or equal to the first frequency domain resource configured for the PDSCH, a frequency domain resource with the same bandwidth as the first frequency domain resource may be determined from the downlink resource corresponding to the non-SBFD symbol, for example, the resource may be called the fifth frequency domain resource. The PDSCH can then be received on the fifth frequency domain resource in the first slot. Since the fifth frequency domain resource has the same bandwidth as the first frequency domain resource, this is advantageous for ensuring smooth PDSCH reception. Accordingly, the network device may send the PDSCH transmitted in multiple slots to the terminal on the fifth frequency domain resource in the first slot.

In an embodiment, the bandwidth of the first frequency domain resource may be determined first. The bandwidth may be represented by the number of Resource Blocks (RBs), for example, k1 RBs.

For example, with a starting RB of an active Bandwidth Part (BWP) corresponding to the first slot as a starting point, k1 consecutive RBs may be determined in the active BWP. In a case that there are only k1-n RBs between the starting RB of the active BWP and a first boundary (the boundary relatively close to the starting RB) of a resource outside the downlink resource, n more RBs may be determined in the downlink resource starting from a second boundary (the boundary relatively far from the starting RB) of the resource outside the downlink resource, and the determined k1-n RBs and n RBs are used as the fifth frequency domain range.

For example, with an ending RB of an active BWP corresponding to the first slot as an ending point, k1 consecutive RBs may be determined in the active BWP. In a case that there are only k1-n RBs from the ending RB of the active BWP to a second boundary (a boundary relatively close to the end RB) of a resource outside the downlink resource, n more RBs may be determined in the downlink resource starting from a first boundary (a boundary relatively far from the end RB) of the resource outside the downlink resource, and the determined k1-n RBs and n RBs are used as the fifth frequency domain range.

For example, a frequency domain range with a duration of k2 consecutive RBs may be determined in the active BWP as a sixth frequency domain resource, and k1 RBs overlapping between the sixth frequency domain resource and the downlink resource corresponding to the non-SBFD symbol may be determined as the fifth frequency domain range.

In a case that the downlink resource corresponding to the non-SBFD symbol is less than the first frequency domain resource configured for the PDSCH, a frequency domain resource with a bandwidth equal to the first frequency domain resource cannot be determined in the downlink resource corresponding to the non-SBFD symbol, and the terminal does not receive the PDSCH in the first slot. Accordingly, the network device may not send the multi-slot transmissions of the PDSCH to the terminal in the first slot.

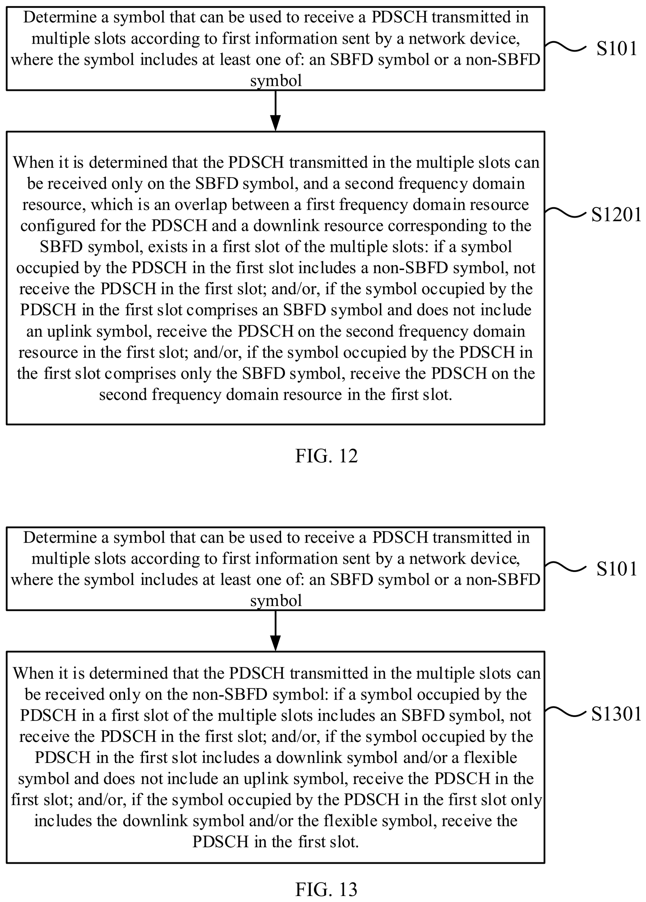

FIG. 12 is a schematic flowchart of another reception determination method according to an embodiment of the present disclosure. The reception determination method in this embodiment may be performed by a terminal. As shown in FIG. 12, the reception determination method further includes:

In step S1201, in a case that it is determined that the PDSCH transmitted in multiple slots can be received only on an SBFD symbol, and a second frequency domain resource which is an overlap between the first frequency domain resource configured for the PDSCH and the downlink resource corresponding to the SBFD symbol exists in a first slot of the multiple slots, in a case that a symbol occupied by the PDSCH in the first slot includes a non-SBFD symbol, the PDSCH is not received in the first slot; and/or, in a case that the symbol occupied by the PDSCH in the first slot includes an SBFD symbol and does not include an uplink symbol, the PDSCH is received on the second frequency domain resource in the first slot; and/or, in a case that the symbol occupied by the PDSCH in the first slot includes only an SBFD symbol, the PDSCH is received on the second frequency domain resource in the first slot.

It should be noted that the embodiment shown in FIG. 12 may be implemented independently or in combination with at least one other embodiment in the present disclosure. The specific selection may be made as needed, and the present disclosure does not limit it.

In an embodiment, in a case that the terminal determines that the PDSCH transmitted in multiple slots can be received only on an SBFD symbol, and there is an overlapping second frequency domain resource between the first frequency domain resource configured for PDSCH and the downlink resource corresponding to the SBFD symbol in a first slot of the multiple slots, the terminal may further determine whether the symbol occupied by PDSCH in the first slot includes a non-SBFD symbol.

For example, in a case that the symbol occupied by the PDSCH in the first slot includes a non-SBFD symbol, in a case that the PDSCH is received in the first slot, the symbol occupied by the PDSCH will include a non-SBFD symbol, which does not meet the restriction that the PDSCH transmitted in multiple slots can be received only on an SBFD symbol. Therefore, the terminal may not receive the multi-slot transmissions of the PDSCH in the first slot. Correspondingly, the network device may not send the multi-slot transmissions of the PDSCH to the terminal in the first slot.

For example, in a case that the symbol occupied by the PDSCH in the first slot includes an SBFD symbol and does not include an uplink symbol, in a case that the PDSCH is received in the first slot, the symbol occupied by the PDSCH includes the SBFD symbol, this can meet the restriction that the PDSCH transmitted in multiple slots can be received only on an SBFD symbol. Therefore, the terminal may receive the PDSCH transmitted in multiple slots on the second frequency domain resource in the first slot. Correspondingly, the network device may send the PDSCH transmitted in multiple slots to the terminal on the second frequency domain resource in the first slot.

For example, in a case that the symbol occupied by the PDSCH in the first slot includes only an SBFD symbol, in a case that the PDSCH is received in the first slot, the symbol occupied by the PDSCH includes only the SBFD symbol, this can meet the restriction that the PDSCH transmitted in multiple slots can be received only on an SBFD symbol. Therefore, the terminal may receive the PDSCH transmitted in multiple slots on the second frequency domain resource in the first slot. Correspondingly, the network device may send the PDSCH transmitted in multiple slots to the terminal on the second frequency domain resource in the first slot.

FIG. 13 is a schematic flowchart of another reception determination method according to an embodiment of the present disclosure. The reception determination method in this embodiment may be performed by a terminal. As shown in FIG. 13, the reception determination method further includes:

In step S1301, in a case that it is determined that the PDSCH transmitted in multiple slots can be received only on an non-SBFD symbol, in a case that a symbol occupied by the PDSCH in a first slot of the multiple slots includes an SBFD symbol, the PDSCH is not received in the first slot; and/or, in a case that the symbol occupied by the PDSCH in the first slot includes a downlink symbol and/or a flexible symbol and does not include an uplink symbol, the PDSCH is received in the first slot; and/or, in a case that the symbol occupied by the PDSCH in the first slot includes only a downlink symbol and/or a flexible symbol, the PDSCH is received in the first slot.

It should be noted that the embodiment shown in FIG. 13 can be implemented independently or in combination with at least one other embodiment in the present disclosure. The specific selection may be made as needed, and the present disclosure does not limit it.

In an embodiment, after determining that the PDSCH transmitted in multiple slots can be received only on a non-SBFD symbol, the terminal may further determine the symbol occupied by the PDSCH in the first slot.

For example, in a case that the symbol occupied by the PDSCH in the first slot includes an SBFD symbol, in a case that the PDSCH is received in the first slot, the symbol occupied by the PDSCH will include an SBFD symbol, which does not meet the restriction that the PDSCH transmitted in multiple slots can be received only on a non-SBFD symbol. Therefore, the terminal may not receive the multi-slot transmissions of the PDSCH in the first slot. Correspondingly, the network device may not send the multi-slot transmissions of the PDSCH to the terminal in the first slot.

For example, in a case that the symbol occupied by the PDSCH in the first slot includes a downlink symbol and/or a flexible symbol but does not include an uplink symbol, in a case that the PDSCH is received in the first slot, the symbol occupied by the PDSCH includes a downlink symbol and/or a flexible symbol but does not include an uplink symbol, while the non-SBFD symbol includes a downlink symbol, a flexible symbol or an uplink symbol, which can meet the restriction that the PDSCH transmitted in multiple slots can be received only on a non-SBFD symbol. Therefore, the terminal may receive the multi-slot transmission of the PDSCH in the first slot. Correspondingly, the network device may send the multi-slot transmission of the PDSCH to the terminal in the first slot.

For example, in a case that the symbol occupied by the PDSCH in the first slot includes only a downlink symbol and/or a flexible symbol, in a case that the PDSCH is received in the first slot, the symbol occupied by the PDSCH includes only a downlink symbols and/or a flexible symbol, which meets the restriction that the PDSCH transmitted in multiple slots can be received only on a non-SBFD symbol. Therefore, the terminal may receive the PDSCH transmitted in multiple slots in the first slot. Correspondingly, the network device may send the PDSCH transmitted in multiple slots to the terminal in the first slot.

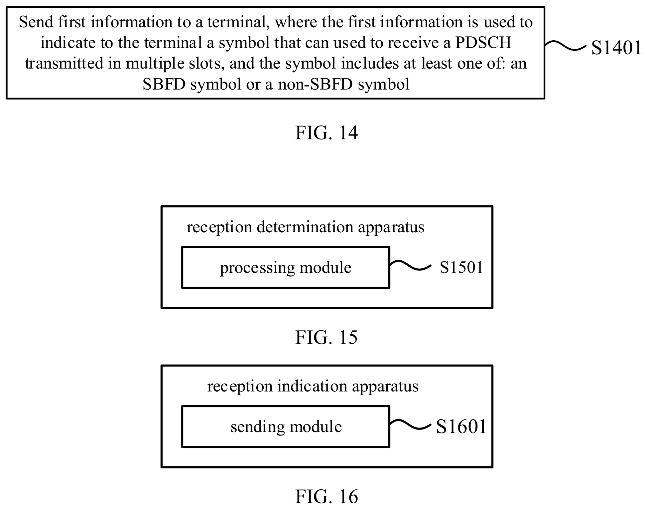

FIG. 14 is a schematic flowchart of a reception indication method according to an embodiment of the present disclosure. The reception indication method in this embodiment may be performed by a network device. The network device may communicate with a terminal. The network device includes but is not limited to a base station in a communication system, such as a 4G base station, a 5G base station, or a 6G base station, etc. The terminal includes but is not limited to a communication apparatus such as a mobile phone, a tablet computer, a wearable device, a sensor, an Internet of Things device, etc.

As shown in FIG. 14, the reception indication method may include the following step:

In step S1401, first information is sent to a terminal. The first information is used to indicate to the terminal a symbol that can be used to receive a PDSCH transmitted in multiple slots, and the symbol includes at least one of: an SBFD symbol or a non-SBFD symbol.

In an embodiment, the network device may send first information to the terminal, indicating the symbol that the terminal can use to receive the PDSCH transmitted in multiple slots. The symbol includes at least one of: an SBFD symbol or a non-SBFD symbol. That is, the first information may indicate that the terminal can receive the PDSCH transmitted in multiple slots on an SBFD symbol and a non-SBFD symbol, or can receive the PDSCH transmitted in multiple slots only on an SBFD symbol, or can receive the PDSCH transmitted in multiple slots only on a non-SBFD symbol.

For example, the network device may determine that the PDSCH transmitted in multiple slots can be sent to the terminal only on an SBFD symbol, and may further indicate through the first information that the terminal can receive the PDSCH transmitted in the multiple slots only on the SBFD symbol. Alternatively, the network device may determine that the PDSCH transmitted in multiple slots can be sent to the terminal only on a non-SBFD symbol, and may further indicate through the first information that the terminal can receive the PDSCH transmitted in the multiple slots only on a non-SBFD symbol. Alternatively, the network device may determine that the PDSCH transmitted in multiple slots can be sent to the terminal on an SBFD symbol and a non-SBFD symbol, and may further indicate through the first information that the terminal can receive the PDSCH transmitted in multiple slots on an SBFD symbol and a non-SBFD symbol.

In this way, it can be ensured that the symbol(s) determined by the terminal that can be used to receive the PDSCH transmitted in multiple slots is(are) the same as the symbol(s) determined by the network device that can be used to send the PDSCH transmitted in multiple slots to the terminal, thereby achieving consistent understanding between the terminal and the network device, which is conducive to ensuring the communication quality between the network device and the terminal.

It should be noted that the embodiments of the present disclosure mainly illustrate the technical solutions in a case that the SBFD symbol is a symbol configured with an uplink subband. However, the technical solutions of the present disclosure may also be applied to cases that the SBFD symbol is a symbol configured with a downlink subband.

In an embodiment, the first information includes at least one of: frequency domain resource information; an indication field.

In an embodiment, in a case that it is determined that the symbol that can be used to send the PDSCH transmitted in multiple slots to the terminal includes an SBFD symbol and a non-SBFD symbol, the frequency domain resource information configures that a frequency domain resource for the PDSCH is within a downlink resource corresponding to the SBFD symbol; and/or, in a case that it is determined that the symbol that can be used to send the PDSCH transmitted in multiple slots to the terminal includes an SBFD symbol or a non-SBFD symbol, the frequency domain resource information configures that the frequency domain resource for the PDSCH to includes a frequency domain resource outside the downlink resource corresponding to the SBFD symbol.

As shown in FIG. 4A, the network device may determine that it can send the PDSCH transmitted in multiple slots to the terminal on an SBFD symbol and a non-SBFD symbol, and in the frequency domain resource information sent by the network device to the terminal, the frequency domain resource for the PDSCH transmitted in multiple slots may be configured to be FD#1, and FD#1 is within the downlink resource corresponding to the SBFD symbol. In a case that the terminal determines that FD#1 is within the downlink resource corresponding to the SBFD symbol, the terminal may further determine that it can receive the PDSCH transmitted in multiple slots on an SBFD symbol and a non-SBFD symbol. For example, the terminal may determine that it can receive the PDSCH transmitted in multiple slots on the symbol #3 to symbol #8. Accordingly, the network device sends the PDSCH transmitted in multiple slots to the terminal on symbol #3 to symbol #8.

As shown in FIG. 4B, the network device may determine that the PDSCH transmitted in multiple slots can be sent to the terminal on a non-SBFD symbol, and in the frequency domain resource information sent by the network device to the terminal, the frequency domain resource for the PDSCH transmitted in multiple slots may be configured to be FD#1, and FD#1 includes a frequency domain resource outside the downlink resource corresponding to the SBFD symbol. In a case that the terminal determines that FD#1 includes a frequency domain resource outside the downlink resource corresponding to the SBFD symbol (e.g., there is a resource conflict between FD#1 and the frequency domain resource outside the downlink resource in FIG. 4B), the terminal may further determine that the PDSCH transmitted in multiple slots can be received only on an SBFD symbol or a non-SBFD symbol. For example, the terminal may determine that the PDSCH transmitted in multiple slots can be received only on a non-SBFD symbol (symbols #3 to #5). Accordingly, the network device sends the PDSCH transmitted in multiple slots to the terminal on symbols #3 to #5.

It should be noted that in a case that the network device determines that the PDSCH transmitted in multiple slots can be sent to the terminal only on an SBFD symbol, the frequency domain resource information may also configure FD#1 to include a frequency domain resource outside the downlink resource corresponding to the SBFD symbol. However, in this case, symbol(s) where the first PDSCH among the PDSCH(s) transmitted in multiple slots is located needs(need) to include an SBFD symbol, or the symbol(s) where the first PDSCH among the PDSCH(s) transmitted in multiple slots is located needs(need) to be all SBFD symbol(s), so that the terminal can determine that the PDSCH transmitted in multiple slots can be received only on an SBFD symbol.

In an embodiment, determining that the PDSCH transmitted in multiple slots can be sent to the terminal only on the SBFD symbol or the non-SBFD symbol includes at least one of:
symbol(s) where the first PDSCH among PDSCH(s) transmitted in multiple slots is located including an SBFD symbol, determining that the PDSCH(s) transmitted in multiple slots can be sent to the terminal only on the SBFD symbol;
symbol(s) where the first PDSCH among the PDSCH(s) transmitted in multiple slots is located being all non-SBFD symbol(s), determining that the PDSCH(s) transmitted in multiple slots can be sent to the terminal only on the non-SBFD symbol(s).

For example, the network device may determine a slot where the first PDSCH among PDSCH(s) transmitted in multiple slots is located, and determine the symbol(s) where the first PDSCH is located in the slot. In a case that the symbol(s) where the first PDSCH is located in the slot includes(include) an SBFD symbol, the network device may determine that the PDSCH(s) transmitted in multiple slots can be sent to the terminal only on the SBFD symbol; in a case that the symbol(s) where the first PDSCH is located in the slot is(are) all non-SBFD symbol(s), the network device may determine that the PDSCH(s) transmitted in multiple slots can be sent to the terminal only on the non-SBFD symbol(s).

In an embodiment, determining that the PDSCH transmitted in multiple slots can be sent to the terminal only on the SBFD symbol or the non-SBFD symbol includes at least one of:
symbol(s) where the first PDSCH among the PDSCH(s) transmitted in multiple slots is located being all SBFD symbol(s), determining that the PDSCH(s) transmitted in multiple slots can be sent to the terminal only on the SBFD symbol(s);
symbol(s) where the first PDSCH among the PDSCH(s) transmitted in multiple slots is located including a non-SBFD symbol, determining that the PDSCH(s) transmitted in multiple slots can be sent to the terminal only on the non-SBFD symbol.

For example, the network device may determine a slot where the first PDSCH among PDSCH(s) transmitted in multiple slots is located, and determine the symbol(s) where the first PDSCH is located in the slot. In a case that all the symbol(s) where the first PDSCH is located in the slot is(are) SBFD symbol(s), the network device may determine that the PDSCH transmitted in multiple slots can be sent to the terminal only on the SBFD symbol(s); in a case that the symbol(s) where the first PDSCH is located in the slot includes(include) a non-SBFD symbol, the network device may determine that the PDSCH transmitted in multiple slots can be sent to the terminal only on the non-SBFD symbol.

In an embodiment, in a case that it is determined that the symbol(s) that can be used to send the PDSCH transmitted in multiple slots to the terminal includes(include) an SBFD symbol and a non-SBFD symbol, and the frequency domain resource for the PDSCH configured by the frequency domain resource information includes a frequency domain resource for receiving the PDSCH on an SBFD symbol and a frequency domain resource for receiving PDSCH on a non-SBFD symbol, it is determined that PDSCH transmitted in multiple slots can be sent on the SBFD symbol and the non-SBFD symbol.

In an embodiment, in a case that the network device determines that the symbol(s) that can be used to send the PDSCH transmitted in multiple slots to the terminal includes(include) an SBFD symbol and a non-SBFD symbol, the first information sent to the terminal may include frequency domain resource information, and the frequency domain resource information may configure a frequency domain resource for receiving the PDSCH on the SBFD symbol and a frequency domain resource for receiving the PDSCH on the non-SBFD symbol. The frequency domain resource for receiving the PDSCH on the SBFD symbol does not include a frequency domain resource outside the downlink resource corresponding to the SBFD symbol.

In this case, the network device may send the PDSCH transmitted in multiple slots to the terminal on the SBFD symbol and the non-SBFD symbol. The terminal may determine, according to the frequency domain resource information, that it can receive PDSCH transmitted in multiple slots on the SBFD symbol and the non-SBFD symbol.

For example, in a non-SBFD symbol, the PDSCH may be sent to the terminal on a frequency domain resource used for receiving the PDSCH in the non-SBFD symbol; in a SBFD symbol, the PDSCH may be sent to the terminal on a frequency domain resource used for receiving the PDSCH in the SBFD symbol.

In an embodiment, the indication field occupies 1 bit or 2 bits. It should be noted that the number of bits occupied by the indication field is not limited to 1 or 2, and may also be other numbers. The following embodiments mainly illustrate the technical solutions of the present disclosure using the cases that the indication field occupies 1 bit and the indication field occupies 2 bits.

In an embodiment, in a case that it is determined that the symbol(s) that can be used to send the PDSCH transmitted in multiple slots to the terminal includes(include) an SBFD symbol and a non-SBFD symbol, the indication field indicates that the terminal can receive the PDSCH transmitted in multiple slots on the SBFD symbol and the non-SBFD symbol; and/or, in a case that it is determined that the symbol(s) that can be used to send the PDSCH transmitted in multiple slots to the terminal includes(include) an SBFD symbol or a non-SBFD symbol, the indication field indicates that the terminal can receive the PDSCH transmitted in the multiple slots only on the SBFD symbol or the non-SBFD symbol.

In an embodiment, in a case that the indication field occupies 1 bit, the indication field may indicate to the terminal that the PDSCH transmitted in multiple slots can be received on an SBFD symbol and a non-SBFD symbol, or indicate to the terminal that the PDSCH transmitted in multiple slots can be received only on an SBFD symbol or a non-SBFD symbol.

For example, in a case that the network device determines that the symbol(s) that can be used to send the PDSCH transmitted in multiple slots to the terminal includes(include) an SBFD symbol and a non-SBFD symbol, a value of the 1 bit occupied by the indication field sent to the terminal is 1, indicating that the terminal can receive the PDSCH transmitted in multiple slots on the SBFD symbol and the non-SBFD symbol.

For example, in a case that the network device determines that the symbol(s) that can be used to send the PDSCH transmitted in multiple slots to the terminal includes(include) an SBFD symbol or a non-SBFD symbol, the value of the 1 bit occupied by the indication field sent to the terminal is 0, indicating that that the terminal can receive the PDSCH transmitted in the multiple slots only on the SBFD symbol or the non-SBFD symbol.

In an embodiment, determining that the PDSCH transmitted in multiple slots can be sent to the terminal only on the SBFD symbol or the non-SBFD symbol includes at least one of:
symbol(s) where the first PDSCH among PDSCH(s) transmitted in multiple slots is located including an SBFD symbol, determining that the PDSCH transmitted in multiple slots can be sent to the terminal only on the SBFD symbol; or
symbol(s) where the first PDSCH among the PDSCH(s) transmitted in multiple slots is located being all non-SBFD symbol(s), determining that the PDSCH transmitted in multiple slots can be sent to the terminal only on the non-SBFD symbol(s).

For example, the network device may determine a slot where the first PDSCH among PDSCH(s) transmitted in multiple slots is located, and determine the symbol(s) where the first PDSCH is located in the slot. In a case that the symbol(s) where the first PDSCH is located in the slot includes(include) an SBFD symbol, the network device may determine that the PDSCH transmitted in multiple slots can be sent to the terminal only on the SBFD symbol; in a case that the symbol(s) where the first PDSCH is located in the slot is(are) all non-SBFD symbol(s), the network device may determine that the PDSCH transmitted in multiple slots can be sent to the terminal only on the non-SBFD symbol(s).

In an embodiment, determining that the PDSCH transmitted in multiple slots can be sent to the terminal only on the SBFD symbol or the non-SBFD symbol includes at least one of:
symbol(s) where the first PDSCH among the PDSCH(s) transmitted in multiple slots is located being all SBFD symbol(s), determining that the PDSCH(s) transmitted in multiple slots can be sent to the terminal only on the SBFD symbol(s); or
symbol(s) where the first PDSCH among the PDSCH(s) transmitted in multiple slots is located including a non-SBFD symbol, determining that the PDSCH(s) transmitted in multiple slots can be sent to the terminal only on the non-SBFD symbol.

For example, the network device may determine a slot where the first PDSCH among PDSCH(s) transmitted in multiple slots is located, and determine the symbol(s) where the first PDSCH is located in the slot. In a case that all the symbol(s) where the first PDSCH is located in the slot is(are) SBFD symbol(s), the network device may determine that the PDSCH transmitted in multiple slots can be sent to the terminal only on the SBFD symbol(s); in a case that the symbol(s) where the first PDSCH is located in the slot includes(include) a non-SBFD symbol, the network device may determine that the PDSCH(s) transmitted in multiple slots can be sent to the terminal only on the non-SBFD symbol.

In an embodiment, determining that the PDSCH transmitted in multiple slots can be sent to the terminal only on the SBFD symbol or the non-SBFD symbol includes at least one of:
symbol(s) where the first PDSCH among the PDSCH(s) transmitted in multiple slots is located being all SBFD symbol(s), determining that the PDSCH(s) transmitted in multiple slots can be sent to the terminal only on the SBFD symbol(s); or
symbol(s) where the first PDSCH among the PDSCH(s) transmitted in multiple slots is located being all non-SBFD symbol(s), determining that the PDSCH(s) transmitted in multiple slots can be sent to the terminal only on the non-SBFD symbol(s).

For example, the network device may determine a slot where the first PDSCH among PDSCH(s) transmitted in multiple slots is located, and determine the symbol(s) where the first PDSCH is located in the slot. In a case that all the symbol(s) where the first PDSCH is located in the slot is(are) SBFD symbol(s), the network device may determine that the PDSCH transmitted in multiple slots can be sent to the terminal only on the SBFD symbol(s); in a case that all the symbol(s) where the first PDSCH is located in the slot is(are) non-SBFD symbol(s), the network device may determine that the PDSCH transmitted in multiple slots can be sent to the terminal only on the non-SBFD symbol(s).

In an embodiment, determining the symbol that can be used to send the PDSCH transmitted in multiple slots includes at least one of:
in a case that it is determined that the symbol that can be used to send the PDSCH transmitted in multiple slots to the terminal includes only an SBFD symbol, indicating that the terminal can receive the PDSCH transmitted in the multiple slots only on the SBFD symbol, wherein the indication field takes a first value, or a the second value or the indication field is empty;
in a case that it is determined that the symbol that can be used to send the PDSCH transmitted in multiple slots to the terminal includes only a non-SBFD symbol, indicating that the terminal can receive the PDSCH transmitted in the multiple slots only on the non-SBFD symbol, wherein the indication field takes a first value, or a the second value or the indication field is empty; or
in a case that it is determined that PDSCH transmitted in multiple slots can be sent on an SBFD symbol and a non-SBFD symbol, indicating that the terminal can receive the PDSCH transmitted in multiple slots on the SBFD symbol and the non-SBFD symbol, wherein the indication field takes a first value, or a second value or the field is empty.

It can be understood that in a case that the indication field takes the first value or the second value and in a case that the indication field is empty, the content indicated by the first information is different. The following describes, through several embodiments, the content indicated by the first information in a case that the indication field takes the first value or the second value and in a case that the indication field is empty. However, the correspondence relationship between the content indicated by the first information and the indication field taking the first value or the second value and in a case that the indication field being empty is not limited to the following embodiments.

In an embodiment, in a case that the indication field occupies 1 bit, the indication field may indicate to the terminal that the PDSCH transmitted in multiple slots can be received only on an SBFD symbol, or indicate to the terminal that the PDSCH transmitted in multiple slots can be received only on a non-SBFD symbol. In a case that the indication field is empty, the indication field may indicate to the terminal that the PDSCH transmitted in multiple slots can be received on a SBFD symbol and a non-SBFD symbol.

For example, the network device determines that the PDSCH transmitted in multiple slots can be sent to the terminal only on an SBFD symbol, and the value of the 1 bit occupied by the indication field sent to the terminal is 1, indicating to the terminal that the PDSCH transmitted in multiple slots can be received only on an SBFD symbol.

For example, the network device determines that the PDSCH transmitted in multiple slots can be sent to the terminal only on a non-SBFD symbols, the value of the 1 bit occupied by the indication field sent to the terminal is 0, indicating to the terminal that the PDSCH transmitted in multiple slots can be received only on a non-SBFD symbol.

For example, the network device determines that the PDSCH transmitted in multiple slots can be sent to the terminal on an SBFD symbol and a non-SBFD symbol, the network device may set the indication field to be empty, indicating to the terminal that the PDSCH transmitted in multiple slots can be received on an SBFD symbol and a non-SBFD symbol.

In an embodiment, in a case that the indication field occupies 1 bit, the indication field may indicate to the terminal that the PDSCH transmitted in multiple slots can be received only on an SBFD symbol, or indicate to the terminal that the PDSCH transmitted in multiple slots can be received on an SBFD symbol and a non-SBFD symbol. In a case that the indication field is empty, the indication field may indicate to the terminal that the PDSCH transmitted in multiple slots can be received only on a non-SBFD symbol.

For example, the network device determines that the PDSCH transmitted in multiple slots can be sent to the terminal only on an SBFD symbol, and the value of the 1 bit occupied by the indication field sent to the terminal is 1, indicating to the terminal that the PDSCH transmitted in multiple slots can be received only on an SBFD symbol.

For example, the network device determines that the PDSCH transmitted in multiple slots can be sent to the terminal on an SBFD symbol and a non-SBFD symbol, and the value of the 1 bit occupied by the indication field sent to the terminal is 0, indicating to the terminal that the PDSCH transmitted in multiple slots can be received on an SBFD symbol and a non-SBFD symbol.

For example, the network device determines that the PDSCH transmitted in multiple slots can be sent to the terminal on a non-SBFD symbol, the network device may set the indication field to be empty, indicating to the terminal that the PDSCH transmitted in multiple slots can be received only on a non-SBFD symbol.

In an embodiment, in a case that the indication field occupies 1 bit, the indication field may indicate to the terminal that the PDSCH transmitted in multiple slots can be received on an SBFD symbol and a non-SBFD symbol, or indicate to the terminal that the PDSCH transmitted in multiple slots can be received only on a non-SBFD symbol. In a case that the indication field is empty, the indication filed may indicate to the terminal that the PDSCH transmitted in multiple slots can be received only on an SBFD symbol.

For example, the network device determines that the PDSCH transmitted in multiple slots can be sent to the terminal on an SBFD symbol and a non-SBFD symbol, and the value of the 1 bit occupied by the indication field sent to the terminal is 1, indicating that the terminal can receive the PDSCH transmitted in multiple slots on an SBFD symbol and a non-SBFD symbol.

For example, the network device determines that the PDSCH transmitted in multiple slots can be sent to the terminal only on a non-SBFD symbol, and the value of the 1 bit occupied by the indication field sent to the terminal is, indicating that the terminal can receive the PDSCH transmitted in the multiple slots only on a non-SBFD symbol.

For example, the network device determines that the PDSCH transmitted in multiple slots can be sent to the terminal only on a SBFD symbol, the network device may set the indication field to be empty, indicating that the terminal can receive the PDSCH transmitted in the multiple slots only on an SBFD symbol.

In an embodiment, in a case that it is determined that the symbol(s) that can be used to send PDSCH transmitted in multiple slots to the terminal includes(include) an SBFD symbol and a non-SBFD symbol, the indication field indicates that the terminal can receive the PDSCH transmitted in multiple slots on an SBFD symbol and a non-SBFD symbol; and/or, in a case that it is determined that the symbol(s) that can be used to send PDSCH transmitted in multiple slots to the terminal includes(include) only an SBFD symbol, the indication field indicates that the terminal can receive the PDSCH transmitted in the multiple slots only on an SBFD symbol; and/or, in a case that it is determined that the symbol(s) that can be used to send PDSCH for transmission in multiple slots to the terminal includes(include) only a non-SBFD symbol, the indication field indicates that the terminal can receive the PDSCH transmitted in the multiple slots only on a non-SBFD symbol.

In an embodiment, in a case that the indication field occupies 2 bits, the indication field may indicate to the terminal that the PDSCH transmitted in multiple slots can be received on an SBFD symbol and a non-SBFD symbol, or indicate to the terminal that the PDSCH transmitted in multiple slots can be received only on a non-SBFD symbol, or indicate to the terminal that the PDSCH transmitted in multiple slots can be received only on an SBFD symbol.

For example, the network device determines that it can send PDSCH transmitted in multiple slots to the terminal on an SBFD symbol and a non-SBFD symbol, and the value of the 2 bits occupied by the indication field sent to the terminal is 00, indicating to the terminal that the PDSCH transmitted in multiple slots can be received on an SBFD symbol and a non-SBFD symbol.

For example, the network device determines that the PDSCH transmitted in multiple slots can be sent to the terminal only on an SBFD symbol, and the value of the 2 bits occupied by the indication field sent to the terminal is 01, indicating to the terminal that the PDSCH transmitted in multiple slots can be received only on an SBFD symbol.

For example, the network device determines that PDSCH transmitted in multiple slots can be sent to the terminal only on a non-SBFD symbol, and the value of the 2 bits occupied by the indication field sent to the terminal is 10, indicating to the terminal that PDSCH transmitted in multiple slots can be received only on a non-SBFD symbol.

It should be noted that sending the PDSCH transmitted in multiple slots to the terminal on a certain type of symbol in the embodiments of the present disclosure does not mean that the network device must send the PDSCH transmitted in multiple slots to the terminal on this type of symbol, but means that the network device may send PDSCH transmitted in multiple slots to the terminal on this type of symbol, and should not send PDSCH transmitted in multiple slots to the terminal on symbol(s) other than this type of symbol.

For example, the network device determining that it can send the PDSCH transmitted in multiple slots to a terminal on an SBFD symbol and a non-SBFD symbol means that: the network device may send the PDSCH transmitted in multiple slots to the terminal on an SBFD symbol and a non-SBFD symbol in each slot where the PDSCH is located. This does not mean that the network device needs to send the PDSCH transmitted in multiple slots to the terminal on an SBFD symbol and a non-SBFD symbol in each slot where the PDSCH is located.

For example, the network device determining that it can send the PDSCH transmitted in multiple slots to a terminal only on an SBFD symbol means that: the network device may send the PDSCH transmitted in multiple slots to the terminal on an SBFD symbol in each slot where the PDSCH is located, and cannot receive the PDSCH transmitted in multiple slots on a non-SBFD symbol. This does not mean that the network device needs to send the PDSCH transmitted in multiple slots to the terminal on an SBFD symbol in each slot where the PDSCH is located.

For example, the network device determining that it can send the PDSCH transmitted in multiple slots to a terminal only on a non-SBFD symbol means that: the network device may send the PDSCH transmitted in multiple slots to the terminal on a non-SBFD symbol in each slot where the PDSCH is located, and cannot receive the PDSCH transmitted in multiple slots on an SBFD symbol. This does not mean that the network device needs to send the PDSCH transmitted in multiple slots to the terminal on a non-SBFD symbol in each slot where the PDSCH is located.

Regarding on which symbol(s) the network device sends the PDSCH transmitted in multiple slots to the terminal in each slot where the PDSCH is located, further determination is needed. The specific determination method will be described in the subsequent embodiments.

In an embodiment, the reception indication method further includes: in a case that it is determined that the PDSCH transmitted in multiple slots can be sent on an SBFD symbol and a non-SBFD symbol, and symbol(s) occupied by the PDSCH in multiple slots does(do) not include an SBFD symbol: sending the PDSCH on a first frequency domain resource configured for the PDSCH in multiple slots.

In a case that the network device determines that the PDSCH transmitted in multiple slots can be sent on an SBFD symbol and a non-SBFD symbol, the network device may further determine whether the symbol(s) occupied by the PDSCH in multiple slots includes(include) an SBFD symbol.

In a case that the symbol(s) occupied by the PDSCH in multiple slots does(do) not include an SBFD symbol, in a case that the network device performs sending, in multiple slots, of the PDSCH transmitted in multiple slots, a situation where the PDSCH is received on an SBFD symbol will not happen. Therefore, the first resource FD#1 configured for the PDSCH will not conflict with a frequency domain resource outside the downlink resource in multiple slots. Therefore, the PDSCH may be sent on FD#1 in multiple slots.

In an embodiment, the reception indication method further includes: in a case that it is determined that the PDSCH transmitted in multiple slots can be sent on an SBFD symbol and a non-SBFD symbol, and a first frequency domain resource configured for the PDSCH is located within a downlink resource corresponding to the SBFD symbol in a first slot of the multiple slots: sending the PDSCH in the first slot.

In a case that the network device determines that it can receive the PDSCH transmitted in multiple slots on an SBFD symbol and a non-SBFD symbol, the network device may further determine whether the first frequency domain resource FD#1 configured for the PDSCH includes a frequency domain resource outside the downlink resource corresponding to the SBFD symbol in the first slot of multiple slots.

In a case that FD#1 includes a frequency domain resource outside the downlink resource corresponding to the SBFD symbol, that is, FD#1 is not located within the downlink resource corresponding to the SBFD symbol, in a case that the network device receives the PDSCH transmitted in multiple slots on the SBFD symbol in the first slot, FD#1 will conflict with the frequency domain resource outside the downlink resource. Therefore, the PDSCH transmitted in multiple slots may not be sent to the terminal in the first slot.

In a case that FD#1 does not include a frequency domain resource outside the downlink resource corresponding to the SBFD symbol, that is, FD#1 is located within the downlink resource corresponding to the SBFD symbol, in a case that the network device receives the PDSCH transmitted in multiple slots on the SBFD symbol in the first slot, FD#1 will not conflict with the frequency domain resource outside the downlink resource. Therefore, the PDSCH transmitted in multiple slots can be sent to the terminal in the first slot.

In an embodiment, the reception indication method further includes: in a case that it is determined that the PDSCH transmitted in multiple slots can be sent on an SBFD symbol and a non-SBFD symbol, and symbol(s) occupied by the PDSCH in the first slot of the multiple slots includes(include) at least one SBFD symbol, and a first frequency domain resource configured for the PDSCH in the first slot includes a frequency domain resource outside a downlink resource corresponding to the SBFD symbol: not sending the PDSCH in the first slot.

In an embodiment, the reception indication method further includes: symbol(s) occupied by the PDSCH in a first slot of the multiple slots including an uplink symbol, not sending the PDSCH in the first slot. This embodiment may be combined with any other embodiment in the present disclosure.

Regardless of whether the network device determines that the PDSCH transmitted in multiple slots can be sent to the terminal on an SBFD symbol and a non-SBFD symbol, or determines that the PDSCH transmitted in multiple slots can be sent to the terminal only on an SBFD symbol, or determines that the PDSCH transmitted in multiple slots can be sent to the terminal only on a non-SBFD symbol, the network device may determine whether the symbol(s) occupied by the PDSCH in a first slot of multiple slots used to receive the PDSCH (for example, a flexible slot configured with an uplink subband) includes(include) an uplink symbol. In a case that it is determined that the symbol(s) occupied by the PDSCH in the first slot includes(include) an uplink symbol, FD#1 will conflict with a frequency domain resource outside the downlink resource, and therefore the PDSCH may not be sent to the terminal in the first slot.

In an embodiment, the reception indication method further includes: in a case that it is determined that the PDSCH transmitted in multiple slots can be sent on an SBFD symbol and a non-SBFD symbol, the symbol(s) occupied by the PDSCH in multiple slots includes(include) at least one SBFD symbol, and a second frequency domain resource, which is an overlap between a first frequency domain resource configured for the PDSCH and a downlink resource corresponding to the SBFD symbol, exists in multiple slots, sending the PDSCH on the second frequency domain resource in the multiple slots.

In an embodiment, in a case that the network device determines that it can send the PDSCH transmitted in multiple slots to the terminal on an SBFD symbol and a non-SBFD symbol, the network device may further determine whether a second frequency domain resource FD#2 which is an overlap between the first frequency domain resource FD#1 configured for PDSCH and the downlink resource corresponding to the SBFD symbol exists in multiple slots.

In a case that the overlapping second frequency domain resource FD#2 exists between FD#1 and the downlink resource corresponding to the SBFD symbol, the network device may perform, in multiple slots used to receive the PDSCH, sending of the PDSCH transmitted in multiple slots to the terminal on FD#2.

Since FD#2 is located within the downlink resource corresponding to the SBFD symbol, sending the PDSCH transmitted in multiple slots to the terminal on FD#2 can ensure that the frequency domain resource for receiving the PDSCH on the SBFD symbol in each slot does not conflict with the frequency domain resource outside the downlink resource.

In an embodiment, on the basis of determining whether the overlapping second frequency domain resource FD#2 exists between the first frequency domain resource FD#1 configured for the PDSCH and the downlink resource corresponding to the SBFD symbol in the first slot of multiple slots, the network device may further determine whether the symbol(s) occupied by the first PDSCH among the PDSCH(s) transmitted in multiple slots includes(include) at least one SBFD symbol.

In a case that there is an overlapping second frequency domain resource FD#2 between FD#1 and the downlink resource corresponding to the SBFD symbol, and the symbol(s) occupied by the first PDSCH among the PDSCH(s) transmitted in multiple slots includes(include) at least one SBFD symbol, the network device may perform, in multiple slots used to send the PDSCH to the terminal, sending of the PDSCH(s) transmitted in multiple slots to the terminal on FD#2.

In an embodiment, on the basis of determining whether there is an overlapping second frequency domain resource FD#2 between the first frequency domain resource FD#1 configured for PDSCH and the downlink resource corresponding to the SBFD symbol in the first slot of multiple slots, the network device may further determine whether all the symbols occupied by the PDSCH in the PDSCH(s) transmitted in multiple slots include at least one SBFD symbol.

In a case that there is an overlapping second frequency domain resource FD#2 between FD#1 and the downlink resource corresponding to the SBFD symbol, and all the symbols occupied by the PDSCH in the PDSCH(s) transmitted in multiple slots include at least one SBFD symbol, the network device may perform, in the multiple slots used to send the PDSCH to the terminal, sending of the PDSCH(s) transmitted in multiple slots to the terminal on FD#2.

In an embodiment, the reception indication method further includes: in a case that it is determined that the PDSCH transmitted in multiple slots can be sent on an SBFD symbol and a non-SBFD symbol, the symbol(s) occupied by the PDSCH in multiple slots includes(include) at least one SBFD symbol, and there is an overlapping second frequency domain resource between the first frequency domain resource configured for the PDSCH and the downlink resource corresponding to the SBFD symbol in multiple slots, the PDSCH is sent on the second frequency domain resource on an SBFD symbol in a first slot of the multiple slots, and the PDSCH is sent on the first frequency domain resource on a non-SBFD symbol in the first slot.

In an embodiment, in a case that the network device determines that it can send the PDSCH transmitted in multiple slots to the terminal on an SBFD symbol and a non-SBFD symbol, the network device may further determine whether there is an overlapping second frequency domain resource FD#2 between the first frequency domain resource FD#1 configured for PDSCH and the downlink resource corresponding to the SBFD symbol in the first slot of the multiple slots.

In a case that there is an overlapping second frequency domain resource FD#2 between FD#1 and the downlink resource corresponding to the SBFD symbol, the network device may send the PDSCH transmitted in multiple slots to the terminal on FD#2 on the SBFD symbol in the first slot, and may send the PDSCH transmitted in multiple slots to the terminal on FD#1 on the non-SBFD symbol in the first slot.

Since FD#2 is located within the downlink resource corresponding to the SBFD symbol, sending the PDSCH transmitted in multiple slots to the terminal on FD#2 on the SBFD symbol can ensure that the frequency domain resource for sending the PDSCH to the terminal on the SBFD symbol in each slot does not conflict with the frequency domain resource outside the downlink resource. And, there is no frequency domain resource outside the downlink resource on the non-SBFD symbol, and therefore the PDSCH transmitted in multiple slots may be sent to the terminal on FD#1 on the non-SBFD symbol, and there will be no conflict with the frequency domain resource outside the downlink resource, and this is conductive to ensuring that the frequency domain resources are fully utilized.

In an embodiment, the reception indication method further includes: in a case that it is determined that the PDSCH transmitted in multiple slots can be sent on an SBFD symbol and a non-SBFD symbol, and the symbol(s) occupied by the PDSCH in multiple slots includes(include) at least one SBFD symbol, and the symbol(s) occupied by the PDSCH in the first slot of the multiple slots does(do) not include an SBFD symbol: sending the PDSCH on the first frequency domain resource configured for the PDSCH in the first slot; and/or, in a case that the symbol(s) occupied by the PDSCH in the first slot of the multiple slots includes(include) an SBFD symbol, sending the PDSCH on a second frequency domain resource which is an overlap between the first frequency domain resource configured for the PDSCH and the downlink resource corresponding to the SBFD symbol in the first slot.

In an embodiment, in a case that the network device determines that it can send the PDSCH transmitted in multiple slots to the terminal on an SBFD symbol and a non-SBFD symbol, and the symbol(s) occupied by PDSCH in multiple slots includes(include) at least one SBFD symbol, the network device may further determine whether the symbol(s) occupied by PDSCH in the first slot of the multiple slots includes(include) an SBFD symbol.

For example, in a case that it is determined that the symbol(s) occupied by PDSCH in the first slot does(do) not include an SBFD symbol, there will be no conflict between the first frequency domain resource configured for PDSCH and a frequency domain resource outside the downlink resource in the first slot. Therefore, the network device may send the PDSCH to the terminal on the first frequency domain resource configured for PDSCH in the first slot.

For example, in a case that it is determined that the symbol(s) occupied by the PDSCH in the first slot includes(include) an SBFD symbol, the network device may further determine the second frequency domain resource which is an overlap between the first frequency domain resource configured for the PDSCH and the downlink resource corresponding to the SBFD symbol in the first slot. Since the second frequency domain resource is within the downlink resource corresponding to the SBFD symbol, the second frequency domain resource will not conflict with the frequency domain resource outside the downlink resource, and the network device may send the PDSCH to the terminal on the second frequency domain resource in the first slot.

In an embodiment, the reception indication method further includes: in a case that it is determined that the PDSCH transmitted in multiple slots can be sent on an SBFD symbol and a non-SBFD symbol, and a third frequency domain resource for receiving the PDSCH on the SBFD symbol and a fourth frequency domain resource for receiving the PDSCH on the non-SBFD symbol are configured: sending the PDSCH on the third frequency domain resource on the SBFD symbol, and sending the PDSCH on the fourth frequency domain resource on the non-SBFD symbol.

In an embodiment, in a case that the network device determines that it can send the PDSCH transmitted in multiple slots to the terminal on an SBFD symbol and a non-SBFD symbol, and the symbol(s) occupied by PDSCH in multiple slots includes(include) at least one SBFD symbol, the network device may further determine whether the third frequency domain resource for receiving the PDSCH on the SBFD symbol and the fourth frequency domain resource for receiving the PDSCH on the non-SBFD symbol are configured. The third frequency domain resource does not include a frequency domain resource outside the downlink resource corresponding to the SBFD symbol.

In a case that the network device configures the third frequency domain resource for receiving the PDSCH on the SBFD symbol and the fourth frequency domain resource for receiving the PDSCH on the non-SBFD symbol for the terminal, since the third frequency domain resource does not include a frequency domain resource outside the downlink resource corresponding to the SBFD symbol, the third frequency domain resource will not conflict with the frequency domain resource outside the downlink resource, and the PDSCH transmitted in multiple slots may be sent to the terminal on the third frequency domain resource on SBFD symbol(s) occupied by the PDSCH in multiple slots for transmitting the PDSCH.

There is no frequency domain resource outside the downlink resource on an non-SBFD symbol, and thus the fourth frequency domain resource will not conflict with the frequency domain resource outside the downlink resource. Therefore, the PDSCH may be sent to the terminal on the fourth frequency domain resource on non-SBFD symbol(s) occupied by PDSCH in multiple slots for transmitting the PDSCH.

In an embodiment, the reception indication method further includes: in a case that it is determined that the PDSCH transmitted in multiple slots can be sent on an SBFD symbol and a non-SBFD symbol, and the symbol(s) where the PDSCH is located in a first slot of the multiple slots includes(include) a non-SBFD symbol, in a case that a downlink resource corresponding to the non-SBFD symbol is greater than or equal to a first frequency domain resource configured for the PDSCH, determining a fifth frequency domain resource in the downlink resource, and sending the PDSCH on the fifth frequency domain resource in the first slot, where a bandwidth of the fifth frequency domain resource is equal to a bandwidth of the first frequency domain resource; and/or, in a case that the downlink resource corresponding to the non-SBFD symbol is less than the first frequency domain resource configured for the PDSCH, not sending the PDSCH in the first slot.

In an embodiment, in a case that the network device determines that it can send the PDSCH transmitted in multiple slots to the terminal on an SBFD symbol and a non-SBFD symbol, and the symbol(s) where the PDSCH is located in a first slot of the multiple slots includes(include) a non-SBFD symbol, the network device may further determine a relationship between the downlink resource corresponding to the non-SBFD symbol and the first frequency domain resource configured for the PDSCH.

In a case that the downlink resource corresponding to the non-SBFD symbol is greater than or equal to the first frequency domain resource configured for the PDSCH, a frequency domain resource with the same bandwidth as the first frequency domain resource may be determined from the downlink resource corresponding to the non-SBFD symbol. This resource, for example, is called the fifth frequency domain resource. The PDSCH may then be sent on the fifth frequency domain resource in the first slot. Since the fifth frequency domain resource has the same bandwidth as the first frequency domain resource, this helps ensure smooth reception of the PDSCH.

In an embodiment, the bandwidth of the first frequency domain resource may be determined first. The bandwidth may be represented by the number of RBs, for example, k1 RBs.

For example, with a starting RB of an active BWP corresponding to the first slot as a starting point, k1 consecutive RBs may be determined in the active BWP. In a case that there are only k1-n RBs from the starting RB of the active BWP to a first boundary (a boundary relatively close to the starting RB) of a resource outside the downlink resource, n more RBs may be determined in the downlink resource starting from a second boundary (a boundary relatively far from the starting RB) of the resource outside the downlink resource, and the determined k1-n RBs and n RBs are used as the fifth frequency domain range.

For example, with an ending RB of the active BWP corresponding to the first slot as an ending point, k1 consecutive RBs may be determined in the active BWP. In a case that there are only k1-n RBs from the ending RB of the active BWP to a second boundary (a boundary relatively close to the ending RB) of a resource outside the downlink resource, n more RBs may be determined in the downlink resource starting from a first boundary (a boundary relatively far from the ending RB) of the resource outside the downlink resource, and the determined k1-n RBs and n RBs are used as the fifth frequency domain range.

For example, a frequency domain range with a duration of k2 consecutive RBs in the active BWP may be determined as a sixth frequency domain resource, and k1 RBs overlapping between the sixth frequency domain resource and the downlink resource corresponding to non-SBFD symbol may be determined as the fifth frequency domain range.

In a case that the downlink resource corresponding to the non-SBFD symbol is less than the first frequency domain resource configured for the PDSCH, a frequency domain resource with a bandwidth equal to the bandwidth of the first frequency domain resource cannot be determined in the downlink resource corresponding to the non-SBFD symbol, and the network device does not send the PDSCH to the terminal in the first slot.

In an embodiment, the reception indication method further includes: in a case that it is determined that the PDSCH transmitted in multiple slots can be sent only on an SBFD symbol, and a second frequency domain resource, which is an overlap between the first frequency domain resource configured for the PDSCH and the downlink resource corresponding to the SBFD symbol, exists in a first slot of the multiple slots, in a case that the symbol(s) occupied by the PDSCH in the first slot includes(include) a non-SBFD symbol, not sending the PDSCH in the first slot; and/or, in a case that the symbol(s) occupied by the PDSCH in the first slot includes(include) an SBFD symbol and does(do) not include an uplink symbol, sending the PDSCH on the second frequency domain resource in the first slot; and/or, in a case that the symbol(s) occupied by the PDSCH in the first slot only includes(include) an SBFD symbol, sending the PDSCH on the second frequency domain resource in the first slot.

In an embodiment, in a case that the network device determines that the PDSCH transmitted in multiple slots can be sent to the terminal only on an SBFD symbol, and there is an overlapping second frequency domain resource between the first frequency domain resource configured for the PDSCH and the downlink resource corresponding to the SBFD symbol in the first slot of the multiple slots, the network device may further determine whether the symbol(s) occupied by PDSCH in the first slot includes(include) a non-SBFD symbol.

For example, in a case that the symbol(s) occupied by PDSCH in the first slot includes(include) a non-SBFD symbol, in a case that the PDSCH is sent to the terminal in the first slot, the symbol(s) occupied by PDSCH will include a non-SBFD symbol, which does not meet the restriction that the PDSCH transmitted in multiple slots can be sent to the terminal only on an SBFD symbol. Therefore, the network device may not send multi-slot transmissions of the PDSCH to the terminal in the first slot.

For example, in a case that the symbol(s) occupied by PDSCH in the first slot includes(include) an SBFD symbol and does(do) not include an uplink symbol, in a case that PDSCH is sent to the terminal in the first slot, the symbol(s) occupied by PDSCH includes(include) an SBFD symbol, which can meet the restriction that the PDSCH transmitted in multiple slots can be sent to the terminal only on an SBFD symbol. Therefore, the network device may send PDSCH transmitted in multiple slots to the terminal on the second frequency domain resource in the first slot.

For example, in a case that the symbol(s) occupied by PDSCH in the first slot only includes(include) an SBFD symbol, in a case that PDSCH is received in the first slot, the symbol(s) occupied by PDSCH only includes(include) an SBFD symbol, which can meet the restriction that the PDSCH transmitted in multiple slots can be sent to the terminal only on an SBFD symbol. Therefore, the network device may send the PDSCH transmitted in multiple slots to the terminal on the second frequency domain resource in the first slot.

In an embodiment, the reception indication method further includes: in a case that it is determined that the PDSCH transmitted in multiple slots can be sent only on a non-SBFD symbol, in a case that the symbol(s) occupied by the PDSCH in a first slot of the multiple slots includes(include) an SBFD symbol, not sending the PDSCH in the first slot; and/or, in a case that the symbol(s) occupied by the PDSCH in the first slot includes(include) a downlink symbol and/or a flexible symbol and does(do) not include an uplink symbol, receiving the PDSCH in the first slot; and/or, in a case that the symbol(s) occupied by the PDSCH in the first slot only includes(include) a downlink symbol and/or a flexible symbol, sending the PDSCH in the first slot.

In an embodiment, after determining that the PDSCH transmitted in multiple slots can be sent to the terminal only on a non-SBFD symbol, the network device may further determine the symbol(s) occupied by the PDSCH in the first slot.

For example, in a case that the symbol(s) occupied by PDSCH in the first slot includes(include) an SBFD symbol, in a case that PDSCH is sent to the terminal in the first slot, the symbol(s) occupied by PDSCH will include an SBFD symbol, which does not meet the restriction that the PDSCH transmitted in multiple slots can be sent to the terminal only on a non-SBFD symbol. Therefore, the network device may not send the multi-slot transmissions of the PDSCH to the terminal in the first slot.

For example, in a case that the symbol(s) occupied by PDSCH in the first slot includes(include) a downlink symbol and/or a flexible symbol, in a case that the PDSCH is sent to the terminal in the first slot, the symbol(s) occupied by PDSCH includes(include) a downlink symbol and/or a flexible symbol and does(do) not include an uplink symbol, while a non-SBFD symbol includes a downlink symbol, a flexible symbol, or an uplink symbol, which can meet the restriction that the PDSCH transmitted in multiple slots can be sent to the terminal only on a non-SBFD symbol. Therefore, the network device may send the PDSCH transmitted in multiple slots to the terminal in the first slot.

For example, in a case that the symbol(s) occupied by PDSCH in the first slot includes(include) only a downlink symbol and/or a flexible symbol, in a case that PDSCH is sent to the terminal in the first slot, the symbol(s) occupied by PDSCH includes(include) only a downlink symbol and/or a flexible symbol, which can meet the restriction that PDSCH transmitted in multiple slots can be sent to the terminal only on a non-SBFD symbol. Therefore, the network device may send the PDSCH transmitted in multiple slots to the terminal in the first slot.

An embodiment of the present disclosure further provides a resource determination method. The method is performed by a communication system, and the communication system includes a terminal and a network device.

The terminal is configured to determine, according to first information sent by the network device, a symbol that can be used to receive a PDSCH transmitted in multiple slots, wherein the symbol includes at least one of: an SBFD symbol or a non-SBFD symbol.

The network device is configured to determine, according to first information sent to the terminal, a symbol that can be used to send the PDSCH transmitted in multiple slots to the terminal, where the symbol includes at least one of: an SBFD symbol or a non-SBFD symbol.

It should be noted that for other contents involved in this embodiment, reference may be made to the description of relevant contents in previous embodiments, and repeated descriptions will be omitted here.

Corresponding to the aforementioned embodiments of the reception determination method and the reception indication method, the present disclosure further provides embodiments of a reception determination apparatus and a reception indication apparatus.

FIG. 15 is a schematic block diagram showing a reception determination apparatus according to an embodiment of the present disclosure. The apparatus may be configured in a terminal. As shown in FIG. 15, the reception determination apparatus includes:
a processing module 1501 configured to, according to first information sent by a network device, determine a symbol that can be used to receive a Physical Downlink Shared Channel (PDSCH) transmitted in multiple slots, wherein the symbol includes at least one of: a Subband Full Duplex (SBFD) symbol or a non-SBFD symbol.

In an embodiment, the first information includes at least one of: frequency domain resource information; or an indication field.

In an embodiment, the processing module is configured to perform at least one of:
in a case that the frequency domain resource information sent by the network device configures that a frequency domain resource for the PDSCH is within a downlink resource corresponding to the SBFD symbol, determining that the PDSCH transmitted in the multiple slots can be received on the SBFD symbol and the non-SBFD symbol; or
in a case that the frequency domain resource information sent by the network device configures that the frequency domain resource for the PDSCH includes a frequency domain resource outside the downlink resource corresponding to the SBFD symbol, determining that the PDSCH transmitted in the multiple slots can be received only on the SBFD symbol or the non-SBFD symbol.

In an embodiment, the processing module is configured to: in a case that a frequency domain resource for receiving the PDSCH on the SBFD symbol and a frequency domain resource for receiving the PDSCH on the non-SBFD symbol are configured, determine that the PDSCH transmitted in the multiple slots can be received on the SBFD symbol and the non-SBFD symbol.

In an embodiment, the indication field occupies 1 bit or 2 bits.

In an embodiment, the processing module is configured to perform at least one of:
in a case that the indication field indicates that the PDSCH transmitted in the multiple slots can be received on the SBFD symbol and the non-SBFD symbol, determining that the PDSCH transmitted in the multiple slots can be received on the SBFD symbol and the non-SBFD symbol; or
in a case that the indication field indicates that the PDSCH transmitted in the multiple slots can be received only on the SBFD symbol or the non-SBFD symbol, determining that the PDSCH transmitted in the multiple slots can be received only on the SBFD symbol or the non-SBFD symbol.

In an embodiment, the processing module is configured to perform at least one of:
in a case that the indication field indicates that the PDSCH transmitted in the multiple slots can be received only on the SBFD symbol, determining that the PDSCH transmitted in the multiple slots can be received only on the SBFD symbol;
in a case that the indication field indicates that the PDSCH transmitted in the multiple slots can be received only on the non-SBFD symbol, determining that the PDSCH transmitted in the multiple slots can be received only on the non-SBFD symbol; or
in a case that it is determined that the indication field is empty, determining that the PDSCH transmitted in the multiple slots can be received on the SBFD symbol and the non-SBFD symbol.

In an embodiment, the processing module is configured to perform at least one of:
in a case that the indication field indicates that the PDSCH transmitted in the multiple slots can be received on the SBFD symbol and the non-SBFD symbol, determining that the PDSCH transmitted in the multiple slots can be received on the SBFD symbol and the non-SBFD symbol;
in a case that the indication field indicates that the PDSCH transmitted in the multiple slots can be received only on the SBFD symbol, determining that the PDSCH transmitted in the multiple slots can be received only on the SBFD symbol; or
in a case that the indication field indicates that the PDSCH transmitted in the multiple slots can be received only on the non-SBFD symbol, determining that the PDSCH transmitted in the multiple slots can be received only on the non-SBFD symbol.

In an embodiment, the processing module is further configured to: in a case that it is determined that the PDSCH transmitted in the multiple slots can be received on the SBFD symbol and the non-SBFD symbol and a first frequency domain resource configured for the PDSCH is located within a downlink resource corresponding to the SBFD symbol in a first slot of the multiple slots: receive the PDSCH in the first slot.

In an embodiment, the processing module is further configured to: in a case that it is determined that the PDSCH transmitted in the multiple slots can be received on the SBFD symbol and the non-SBFD symbol, and a symbol occupied by the PDSCH in a first slot of the multiple slots includes at least one SBFD symbol, and a first frequency domain resource configured for the PDSCH includes a frequency domain resource outside a downlink resource corresponding to the SBFD symbol in the first slot: not receive the PDSCH in the first slot.

In an embodiment, the processing is further configured to: in a case that it is determined that the PDSCH transmitted in the multiple slots can be received on the SBFD symbol and the non-SBFD symbol, a symbol occupied by the PDSCH in the multiple slots includes at least one SBFD symbol, and a second frequency domain resource, which is an overlap between a first frequency domain resource configured for the PDSCH and a downlink resource corresponding to the SBFD symbol, exists in the multiple slots: receive the PDSCH on the second frequency domain resource in the multiple slots.

In an embodiment, the processing module is further configured to: in a case that it is determined that the PDSCH transmitted in the multiple slots can be received on the SBFD symbol and the non-SBFD symbol, a symbol occupied by the PDSCH in the multiple slots includes at least one SBFD symbol, and a second frequency domain resource, which is an overlap between a first frequency domain resource configured for the PDSCH and a downlink resource corresponding to the SBFD symbol, exists in the multiple slots: receive the PDSCH on the second frequency domain resource on an SBFD symbol in a first slot of the multiple slots, and receive the PDSCH on the first frequency domain resource on a non-SBFD symbol in the first slot.

In an embodiment, the processing module is further configured to: in a case that it is determined that the PDSCH transmitted in the multiple slots can be received on the SBFD symbol and the non-SBFD symbol, and a symbol occupied by the PDSCH in the multiple slots includes at least one SBFD symbol: in a case that a symbol occupied by the PDSCH in a first slot of the multiple slots does not include an SBFD symbol, receive the PDSCH on a first frequency domain resource configured for the PDSCH in the first slot; and/or in a case that the symbol occupied by the PDSCH in the first slot of the multiple slots includes the SBFD symbol, receive the PDSCH in the first slot on a second frequency domain resource which is an overlap between the first frequency domain resource configured for the PDSCH and a downlink resource corresponding to the SBFD symbol.

In an embodiment, the processing module is further configured to: in a case that it is determined that the PDSCH transmitted in the multiple slots can be received on the SBFD symbol and the non-SBFD symbol, and a third frequency domain resource for receiving the PDSCH on the SBFD symbol and a fourth frequency domain resource for receiving the PDSCH on the non-SBFD symbol are configured: receive the PDSCH on the third frequency domain resource on the SBFD symbol, and receive the PDSCH on the fourth frequency domain resource on the non-SBFD symbol.

In an embodiment, the processing module is further configured to: in a case that it is determined that the PDSCH transmitted in the multiple slots can be received on the SBFD symbol and the non-SBFD symbol, and a symbol where the PDSCH is located in a first slot of the multiple slots includes a non-SBFD symbol: in a case that a downlink resource corresponding to the non-SBFD symbol is greater than or equal to a first frequency domain resource configured for the PDSCH, determine a fifth frequency domain resource in the downlink resource, and receive the PDSCH on the fifth frequency domain resource in the first slot, wherein a bandwidth of the fifth frequency domain resource is equal to a bandwidth of the first frequency domain resource; and/or, in a case that the downlink resource corresponding to the non-SBFD symbol is smaller than the first frequency domain resource configured for the PDSCH, not receive the PDSCH in the first slot.

In an embodiment, the processing module is further configured to: in a case that it is determined that the PDSCH transmitted in the multiple slots can be received only on the SBFD symbol, and a second frequency domain resource, which is an overlap between a first frequency domain resource configured for the PDSCH and a downlink resource corresponding to the SBFD symbol, exists in a first slot of the multiple slots: in a case that a symbol occupied by the PDSCH in the first slot includes a non-SBFD symbol, not receive the PDSCH in the first slot; and/or, in a case that the symbol occupied by the PDSCH in the first slot includes an SBFD symbol and does not include an uplink symbol, receive the PDSCH on the second frequency domain resource in the first slot; and/or, in a case that the symbol occupied by the PDSCH in the first slot includes only the SBFD symbol, receive the PDSCH on the second frequency domain resource in the first slot.

In an embodiment, the processing module is further configured to: in a case that it is determined that the PDSCH transmitted in the multiple slots can be received only on the non-SBFD symbol: in a case that a symbol occupied by the PDSCH in a first slot of the multiple slots includes an SBFD symbol, not receive the PDSCH in the first slot; and/or, in a case that the symbol occupied by the PDSCH in the first slot includes a downlink symbol and/or a flexible symbol and does not include an uplink symbol, receive the PDSCH in the first slot; in a case that the symbol occupied by the PDSCH in the first slot only includes the downlink symbol and/or the flexible symbol, receive the PDSCH in the first slot.

In an embodiment, the processing module is further configured to: a symbol occupied by the PDSCH in a first slot of the multiple slots including an uplink symbol, not receive the PDSCH in the first slot.

FIG. 16 is a schematic block diagram showing a reception indication apparatus according to an embodiment of the present disclosure. The apparatus may be configured in a network device. As shown in FIG. 16, the reception indication apparatus includes:
a sending module 1601 configured to send first information to a terminal, wherein the first information is used to indicate to the terminal a symbol that can used to receive a PDSCH transmitted in multiple slots, and the symbol includes at least one of: an SBFD symbol or a non-SBFD symbol.

In an embodiment, the first information includes at least one of: frequency domain resource information; or an indication field.

In an embodiment, in a case that it is determined that a symbol that can be used to send the PDSCH transmitted in the multiple slots to the terminal includes the SBFD symbol and the non-SBFD symbol, the frequency domain resource information configures that a frequency domain resource for the PDSCH is within a downlink resource corresponding to the SBFD symbol; and/or, in a case that it is determined that the symbol that can be used to send the PDSCH transmitted in the multiple slots to the terminal includes the SBFD symbol or the non-SBFD symbol, the frequency domain resource information configures that the frequency domain resource for the PDSCH includes a frequency domain resource outside the downlink resource corresponding to the SBFD symbol.

In an embodiment, in a case that it is determined that a symbol that can be used to send the PDSCH transmitted in the multiple slots to the terminal includes the SBFD symbol and the non-SBFD symbol, the frequency domain resource information configures that a frequency domain resource for the PDSCH includes a frequency domain resource for receiving the PDSCH on the SBFD symbol and a frequency domain resource for receiving the PDSCH on the non-SBFD symbol.

In an embodiment, the indication field occupies 1 bit or 2 bits.

In an embodiment, in a case that it is determined that a symbol that can be used to send the PDSCH transmitted in the multiple slots to the terminal includes the SBFD symbol and the non-SBFD symbol, the indication field indicates that the terminal can receive the PDSCH transmitted in the multiple slots on the SBFD symbol and the non-SBFD symbol; and/or, in a case that it is determined that the symbol that can be used to send the PDSCH transmitted in the multiple slots to the terminal includes the SBFD symbol or the non-SBFD symbol, the indication field indicates that the terminal can receive the PDSCH transmitted in the multiple slots only on the SBFD symbol or the non-SBFD symbol.

In an embodiment, in a case that it is determined that a symbol that can be used to send the PDSCH transmitted in the multiple slots to the terminal includes only the SBFD symbol, the indication field indicates that the terminal can receive the PDSCH transmitted in the multiple slots only on the SBFD symbol; and/or, in a case that it is determined that the symbol that can be used to send the PDSCH transmitted in the multiple slots to the terminal includes only the non-SBFD symbol, the indication field indicates that the terminal can receive the PDSCH transmitted in the multiple slots only on the non-SBFD symbol; and/or, in a case that it is determined that the symbol that can be used to send the PDSCH transmitted in the multiple slots to the terminal includes the SBFD symbol and the non-SBFD symbol, the indication field is empty.

In an embodiment, in a case that it is determined that a symbol that can be used to send the PDSCH transmitted in the multiple slots to the terminal includes the SBFD symbol and the non-SBFD symbol, the indication field indicates that the terminal can receive the PDSCH transmitted in the multiple slots on the SBFD symbol and the non-SBFD symbol; and/or, in a case that it is determined that the symbol that can be used to send the PDSCH transmitted in the multiple slots to the terminal includes only the SBFD symbol, the indication field indicates that the terminal can receive the PDSCH transmitted in the multiple slots only on the SBFD symbol; and/or, in a case that it is determined that the symbol that can be used to send the PDSCH transmitted in the multiple slots to the terminal includes only the non-SBFD symbol, the indication field indicates that the terminal can receive the PDSCH transmitted in the multiple slots only on the non-SBFD symbol.

In an embodiment, the processing module is further configured to: in a case that it is determined that the PDSCH transmitted in the multiple slots can be sent on the SBFD symbol and the non-SBFD symbol, and a first frequency domain resource configured for the PDSCH is located within a downlink resource corresponding to the SBFD symbol in the first slot of the multiple slots: send the PDSCH in the first slot.

In an embodiment, the processing module is further configured to: in a case that it is determined that the PDSCH transmitted in the multiple slots can be sent on the SBFD symbol and the non-SBFD symbol, and a symbol occupied by the PDSCH in a first slot of the multiple slots includes at least one SBFD symbol, and a first frequency domain resource configured for the PDSCH includes a frequency domain resource outside a downlink resource corresponding to the SBFD symbol in the first slot: not send the PDSCH in the first slot.

In an embodiment, the processing module is further configured to: in a case that it is determined that the PDSCH transmitted in the multiple slots can be sent on the SBFD symbol and the non-SBFD symbol, a symbol occupied by the PDSCH in the multiple slots includes at least one SBFD symbol, and a second frequency domain resource, which is an overlap between a first frequency domain resource configured for the PDSCH and a downlink resource corresponding to the SBFD symbol, exists in the multiple slots: send the PDSCH on the second frequency domain resource in the multiple slots.

In an embodiment, the processing is further configured to: in a case that it is determined that the PDSCH transmitted in the multiple slots can be sent on the SBFD symbol and the non-SBFD symbol, a symbol occupied by the PDSCH in the multiple slots includes at least one SBFD symbol, and a second frequency domain resource, which is an overlap between a first frequency domain resource configured for the PDSCH and a downlink resource corresponding to the SBFD symbol, exists in the multiple slots: send the PDSCH on the second frequency domain resource on the SBFD symbol in a first slot of the multiple slots, and send the PDSCH on the first frequency domain resource on the non-SBFD symbol in the first slot.

In an embodiment, the processing module is further configured to: in a case that it is determined that the PDSCH transmitted in the multiple slots can be sent on the SBFD symbol and the non-SBFD symbol, and a symbol occupied by the PDSCH in the multiple slots includes at least one SBFD symbol: in a case that a symbol occupied by the PDSCH in a first slot of the multiple slots does not include an SBFD symbol, send the PDSCH on a first frequency domain resource configured for the PDSCH in the first slot; and/or, in a case that the symbol occupied by the PDSCH in the first slot of the multiple slots includes the SBFD symbol, send the PDSCH on a second frequency domain resource which is an overlap between the first frequency domain resource configured for the PDSCH and a downlink resource corresponding to the SBFD symbol in the first slot.

In an embodiment, the processing module is further configured to: hen it is determined that the PDSCH transmitted in the multiple slots can be sent on the SBFD symbol and the non-SBFD symbol, and a third frequency domain resource for receiving the PDSCH on the SBFD symbol and a fourth frequency domain resource for receiving the PDSCH on the non-SBFD symbol are configured: send the PDSCH on the third frequency domain resource on the SBFD symbol and send the PDSCH on the fourth frequency domain resource on the non-SBFD symbol.

In an embodiment, the processing module is configured to: in a case that it is determined that the PDSCH transmitted in the multiple slots can be sent on the SBFD symbol and the non-SBFD symbol, and a symbol where the PDSCH is located in a first slot of the multiple slots includes a non-SBFD symbol: in a case that a downlink resource corresponding to the non-SBFD symbol is greater than or equal to a first frequency domain resource configured for the PDSCH, determine a fifth frequency domain resource in the downlink resource, and send the PDSCH on the fifth frequency domain resource in the first slot, wherein a bandwidth of the fifth frequency domain resource is equal to a bandwidth of the first frequency domain resource; and/or, in a case that the downlink resource corresponding to the non-SBFD symbol is smaller than the first frequency domain resource configured for the PDSCH, not send the PDSCH in the first slot.

In an embodiment, the processing module is configured to: in a case that it is determined that the PDSCH transmitted in the multiple slots can be sent only on the SBFD symbol, and a second frequency domain resource, which is an overlap between a first frequency domain resource configured for the PDSCH and a downlink resource corresponding to the SBFD symbol, exists in a first slot of the multiple slots: in a case that a symbol occupied by the PDSCH in the first slot includes the non-SBFD symbol, not send the PDSCH in the first slot; and/or, in a case that the symbol occupied by the PDSCH in the first slot includes the SBFD symbol and does not include an uplink symbol, send the PDSCH on the second frequency domain resource in the first slot; and/or, in a case that the symbol occupied by the PDSCH in the first slot includes only the SBFD symbol, send the PDSCH on the second frequency domain resource in the first slot.

In an embodiment, the processing module is configured to: in a case that it is determined that the PDSCH transmitted in the multiple slots can be sent only on the non-SBFD symbol: in a case that a symbol occupied by the PDSCH in a first slot of the multiple slots includes the SBFD symbol, not send the PDSCH in the first slot; and/or, in a case that the symbol occupied by the PDSCH in the first slot includes a downlink symbol and/or a flexible symbol and does not include an uplink symbol, send the PDSCH in the first slot; and/or, in a case that the symbol occupied by the PDSCH in the first slot only includes the downlink symbol and/or the flexible symbol, send the PDSCH in the first slot.

In an embodiment, the processing module is configured to: a symbol occupied by the PDSCH in a first slot of the multiple slots including an uplink symbol, not send the PDSCH in the first slot.

Regarding the apparatus embodiments, since they basically correspond to the method embodiments, and for the relevant parts, reference can be made to a part of descriptions of the method embodiments. The apparatus embodiments described above are merely illustrative, modules described as separate components may or may not be physically separated, and components shown as modules may or may not be physical modules, that is, they may be located in one place, or they may be distributed over multiple network modules. A part or all of the modules may be selected according to actual needs to achieve the purpose of solutions in the embodiments. Those of ordinary skill in the art can understand and implement the solutions without paying any creative work.

An embodiment of the present disclosure further proposes a communication system, including a terminal and a network device. The terminal is configured to implement the reception determination method described in any one of the above embodiments, and the network device is configured to implement the reception indication method described in any one of the above embodiments.

An embodiment of the present disclosure further proposes a communication apparatus, including: a processor; and a memory configured to store a computer program; in a when the computer program is executed by the processor, the reception determination method described in any one of the above embodiments is implemented.

An embodiment of the present disclosure further proposes a communication apparatus, including: a processor; and a memory configured to store a computer program; when the computer program is executed by the processor, the receiving indication method described in any one of the above embodiments is implemented.

An embodiment of the present disclosure further provides a computer-readable storage medium for storing a computer program. When the computer program is executed by a processor, the reception determination method described in any one of the above embodiments is implemented.

An embodiment of the present disclosure further provides a computer-readable storage medium for storing a computer program. When the computer program is executed by a processor, the reception indication method described in any one of the above embodiments is implemented.

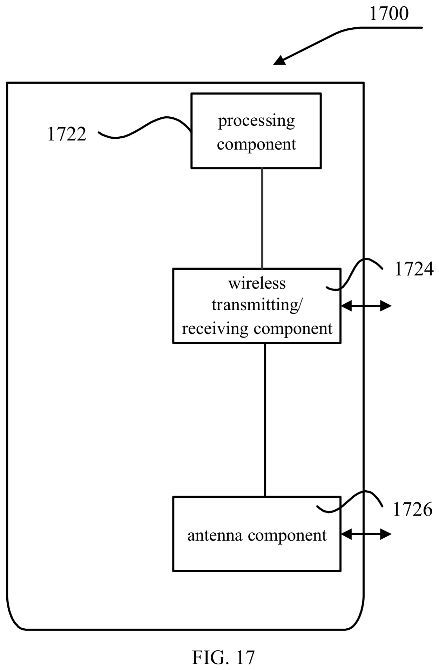

As shown in FIG. 17, FIG. 17 is a schematic block diagram of an apparatus 1700 for reception indication according to an embodiment of the present disclosure. The apparatus 1700 may be a base station. Referring to FIG. 17, the apparatus 1700 includes a processing component 1722, a wireless transmitting/receiving component 1724, an antenna component 1726, and a signal processing part specific to a wireless interface. The processing component 1722 may further include one or more processors. One of the processors in the processing component 1722 may be configured to implement the reception indication method performed by a network device as described in any one of the above embodiments.

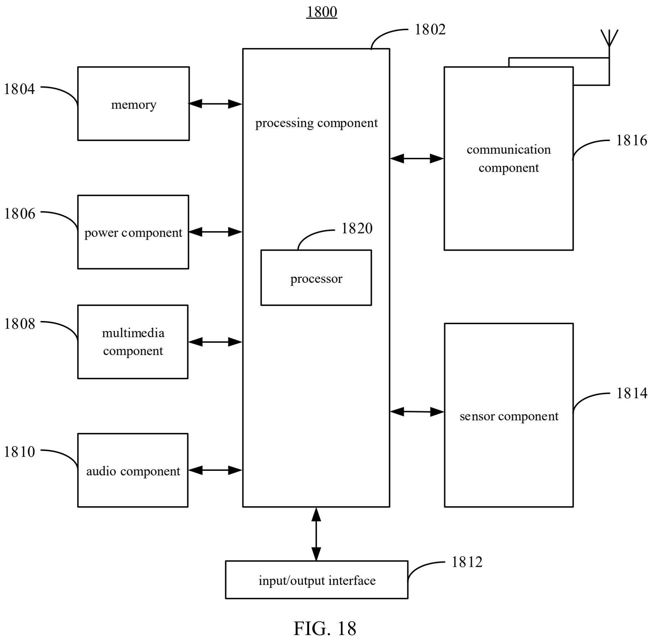

FIG. 18 is a block diagram of an apparatus 1800 for reception determination according to an embodiment of the present disclosure. For example, the apparatus 1800 may be a terminal, such as a mobile phone, a computer, digital broadcast terminal, a messaging device, a gaming console, a tablet, a medical device, exercise equipment, a personal digital assistant, and the like.

Referring to FIG. 18, the apparatus 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the apparatus 1800, such as the operations associated with display, telephone calls, data communications, camera operations, and recording operations. The processing component 1802 may include one or more processors 1820 to execute instructions to perform all or part of steps in the reception determination method performed by the terminal as described in any one of the above embodiments. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the apparatus 1800. Examples of such data include instructions for any applications or methods operated on the apparatus 1800, contact data, phonebook data, messages, pictures, video, etc.

The power component 1806 provides power to various components of the apparatus 1800. The power component 1806 may include a power management system, one or more power sources, and any other components associated with the generation, management, and distribution of power in the apparatus 1800.

The multimedia component 1808 includes a screen providing an output interface between the apparatus 1800 and the user. In some embodiments, the screen may include a liquid crystal display (LCD) and a touch panel (TP). If the screen includes the touch panel, the screen may be implemented as a touch screen to receive input signals from the user.

The audio component 1810 is configured to output and/or input audio signals. For example, the audio component 1810 includes a microphone ("MIC") configured to receive an external audio signal when the apparatus 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the apparatus 1800.

The communication component 1816 is configured to facilitate communication, wired or wirelessly, between the apparatus 1800 and other devices. The apparatus 1800 can access a wireless network based on a communication standard, such as WiFi, 2G, 3G, 4G LTE, 5G NR, or a combination thereof. In one example embodiment, the communication component 1816 receives a broadcast signal or broadcast associated information from an external broadcast management system via a broadcast channel. In one example embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the reception determination method performed by the terminal as described in any one of the above embodiments.

In example embodiments, there is also provided a non-transitory computer-readable storage medium including instructions, such as the memory 1804 including instructions executable by the processor 1820 in the apparatus 1800, for performing the reception determination method performed by the terminal as described in any one of the above embodiments. For example, the non-transitory computer-readable storage medium may be a ROM, a Random Access Memory (RAM), a CD-ROM, a magnetic tape, a floppy disc, an optical data storage device, and the like.

Other embodiments of the present disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A reception determination method, performed by a terminal, the method comprising:
determining a symbol that can be used to receive a Physical Downlink Shared Channel (PDSCH) transmitted in multiple slots according to first information sent by a network device, wherein the symbol comprises at least one of: a Subband Full Duplex (SBFD) symbol or a non-SBFD symbol.

2. The method according to claim 1, wherein the first information comprises at least one of:
frequency domain resource information; or
an indication field.

3. The method according to claim 2, wherein determining the symbol that can be used to receive the PDSCH transmitted in the multiple slots according to the first information sent by the network device comprises at least one of:
determining that the PDSCH transmitted in the multiple slots can be received on the SBFD symbol and the non-SBFD symbol in a case that the frequency domain resource information sent by the network device configures that a frequency domain resource for the PDSCH is within a downlink resource corresponding to the SBFD symbol; or
determining that the PDSCH transmitted in the multiple slots can be received only on the SBFD symbol or the non-SBFD symbol in a case that the frequency domain resource information sent by the network device configures that the frequency domain resource for the PDSCH comprises a frequency domain resource outside the downlink resource corresponding to the SBFD symbol.

4. The method according to claim 2, wherein determining the symbol that can be used to receive the PDSCH transmitted in the multiple slots according to the first information sent by the network device comprises:
determining that the PDSCH transmitted in the multiple slots can be received on the SBFD symbol and the non-SBFD symbol in a case that a frequency domain resource for receiving the PDSCH on the SBFD symbol and a frequency domain resource for receiving the PDSCH on the non-SBFD symbol are configured.

5. The method according to claim 2, wherein the indication field occupies 1 bit or 2 bits.

6. The method according to claim 5, wherein determining the symbol that can be used to receive the PDSCH transmitted in the multiple slots according to the first information sent by the network device comprises at least one of:
determining that the PDSCH transmitted in the multiple slots can be received on the SBFD symbol and the non-SBFD symbol in a case that the indication field indicates that the PDSCH transmitted in the multiple slots can be received on the SBFD symbol and the non-SBFD symbol; or
determining that the PDSCH transmitted in the multiple slots can be received only on the SBFD symbol or the non-SBFD symbol in a case that the indication field indicates that the PDSCH transmitted in the multiple slots can be received only on the SBFD symbol or the non-SBFD symbol.

7. The method according to claim 5, wherein determining the symbol that can be used to receive the PDSCH transmitted in the multiple slots according to the first information sent by the network device comprises at least one of:
determining that the PDSCH transmitted in the multiple slots can be received only on the SBFD symbol in a case that the indication field indicates that the PDSCH transmitted in the multiple slots can be received only on the SBFD symbol;
determining that the PDSCH transmitted in the multiple slots can be received only on the non-SBFD symbol in a case that the indication field indicates that the PDSCH transmitted in the multiple slots can be received only on the non-SBFD symbol; or
determining that the PDSCH transmitted in the multiple slots can be received on the SBFD symbol and the non-SBFD symbol in a case that it is determined that the indication field is empty.

8. The method according to claim 5, wherein determining the symbol that can be used to receive the PDSCH transmitted in the multiple slots according to the first information sent by the network device comprises at least one of:
determining that the PDSCH transmitted in the multiple slots can be received on the SBFD symbol and the non-SBFD symbol in a case that the indication field indicates that the PDSCH transmitted in the multiple slots can be received on the SBFD symbol and the non-SBFD symbol;
determining that the PDSCH transmitted in the multiple slots can be received only on the SBFD symbol in a case that the indication field indicates that the PDSCH transmitted in the multiple slots can be received only on the SBFD symbol; or
determining that the PDSCH transmitted in the multiple slots can be received only on the non-SBFD symbol in a case that the indication field indicates that the PDSCH transmitted in the multiple slots can be received only on the non-SBFD symbol.

9. The method according to any one of claims 1 to 8, further comprising:
in a case that it is determined that the PDSCH transmitted in the multiple slots can be received on the SBFD symbol and the non-SBFD symbol and a first frequency domain resource configured for the PDSCH is located within a downlink resource corresponding to the SBFD symbol in a first slot of the multiple slots:
receiving the PDSCH in the first slot.

10. The method according to any one of claims 1 to 8, further comprising:
in a case that it is determined that the PDSCH transmitted in the multiple slots can be received on the SBFD symbol and the non-SBFD symbol, and a symbol occupied by the PDSCH in a first slot of the multiple slots comprises at least one SBFD symbol, and a first frequency domain resource configured for the PDSCH comprises a frequency domain resource outside a downlink resource corresponding to the SBFD symbol in the first slot:
not receiving the PDSCH in the first slot.

11. The method according to any one of claims 1 to 8, further comprising:
in a case that it is determined that the PDSCH transmitted in the multiple slots can be received on the SBFD symbol and the non-SBFD symbol, a symbol occupied by the PDSCH in the multiple slots comprises at least one SBFD symbol, and a second frequency domain resource, which is an overlap between a first frequency domain resource configured for the PDSCH and a downlink resource corresponding to the SBFD symbol, exists in the multiple slots:
receiving the PDSCH on the second frequency domain resource in the multiple slots.

12. The method according to any one of claims 1 to 8, further comprising:
in a case that it is determined that the PDSCH transmitted in the multiple slots can be received on the SBFD symbol and the non-SBFD symbol, a symbol occupied by the PDSCH in the multiple slots comprises at least one SBFD symbol, and a second frequency domain resource, which is an overlap between a first frequency domain resource configured for the PDSCH and a downlink resource corresponding to the SBFD symbol, exists in the multiple slots:
receiving the PDSCH on the second frequency domain resource on an SBFD symbol in a first slot of the multiple slots, and receiving the PDSCH on the first frequency domain resource on a non-SBFD symbol in the first slot.

13. The method according to any one of claims 1 to 8, further comprising:
in a case that it is determined that the PDSCH transmitted in the multiple slots can be received on the SBFD symbol and the non-SBFD symbol, and a symbol occupied by the PDSCH in the multiple slots comprises at least one SBFD symbol:
in a case that a symbol occupied by the PDSCH in a first slot of the multiple slots does not comprise an SBFD symbol, receiving the PDSCH on a first frequency domain resource configured for the PDSCH in the first slot; and/or
in a case that the symbol occupied by the PDSCH in the first slot of the multiple slots comprises the SBFD symbol, receiving the PDSCH in the first slot on a second frequency domain resource which is an overlap between the first frequency domain resource configured for the PDSCH and a downlink resource corresponding to the SBFD symbol.

14. The method according to any one of claims 1 to 8, further comprising:
in a case that it is determined that the PDSCH transmitted in the multiple slots can be received on the SBFD symbol and the non-SBFD symbol, and a third frequency domain resource for receiving the PDSCH on the SBFD symbol and a fourth frequency domain resource for receiving the PDSCH on the non-SBFD symbol are configured:
receiving the PDSCH on the third frequency domain resource on the SBFD symbol, and receiving the PDSCH on the fourth frequency domain resource on the non-SBFD symbol.

15. The method according to any one of claims 1 to 8, further comprising:
in a case that it is determined that the PDSCH transmitted in the multiple slots can be received on the SBFD symbol and the non-SBFD symbol, and a symbol where the PDSCH is located in a first slot of the multiple slots comprises a non-SBFD symbol:
in a case that a downlink resource corresponding to the non-SBFD symbol is greater than or equal to a first frequency domain resource configured for the PDSCH, determining a fifth frequency domain resource in the downlink resource, and receiving the PDSCH on the fifth frequency domain resource in the first slot, wherein a bandwidth of the fifth frequency domain resource is equal to a bandwidth of the first frequency domain resource; and/or
in a case that the downlink resource corresponding to the non-SBFD symbol is smaller than the first frequency domain resource configured for the PDSCH, not receiving the PDSCH in the first slot.

16. The method according to any one of claims 1 to 8, further comprising:
in a case that it is determined that the PDSCH transmitted in the multiple slots can be received only on the SBFD symbol, and a second frequency domain resource, which is an overlap between a first frequency domain resource configured for the PDSCH and a downlink resource corresponding to the SBFD symbol, exists in a first slot of the multiple slots:
in a case that a symbol occupied by the PDSCH in the first slot comprises a non-SBFD symbol, not receiving the PDSCH in the first slot; and/or
in a case that the symbol occupied by the PDSCH in the first slot comprises an SBFD symbol and does not comprise an uplink symbol, receiving the PDSCH on the second frequency domain resource in the first slot; and/or
in a case that the symbol occupied by the PDSCH in the first slot comprises only the SBFD symbol, receiving the PDSCH on the second frequency domain resource in the first slot.

17. The method according to any one of claims 1 to 8, further comprising:
in a case that it is determined that the PDSCH transmitted in the multiple slots can be received only on the non-SBFD symbol:
in a case that a symbol occupied by the PDSCH in a first slot of the multiple slots comprises an SBFD symbol, not receiving the PDSCH in the first slot; and/or
in a case that the symbol occupied by the PDSCH in the first slot comprises a downlink symbol and/or a flexible symbol and does not comprise an uplink symbol, receiving the PDSCH in the first slot; and/or
in a case that the symbol occupied by the PDSCH in the first slot only comprises the downlink symbol and/or the flexible symbol, receiving the PDSCH in the first slot.

18. The method according to any one of claims 1 to 15, further comprising:
a symbol occupied by the PDSCH in a first slot of the multiple slots comprising an uplink symbol, not receiving the PDSCH in the first slot.

19. A reception indication method, performed by a network device, the method comprising:
sending first information to a terminal, wherein the first information is used to indicate to the terminal a symbol that can used to receive a PDSCH transmitted in multiple slots, and the symbol comprises at least one of: an SBFD symbol or a non-SBFD symbol.

20. The method according to claim 19, wherein the first information comprises at least one of:
frequency domain resource information; or
an indication field.

21. The method according to claim 20, wherein in a case that it is determined that a symbol that can be used to send the PDSCH transmitted in the multiple slots to the terminal comprises the SBFD symbol and the non-SBFD symbol, the frequency domain resource information configures that a frequency domain resource for the PDSCH is within a downlink resource corresponding to the SBFD symbol; and/or
in a case that it is determined that the symbol that can be used to send the PDSCH transmitted in the multiple slots to the terminal comprises the SBFD symbol or the non-SBFD symbol, the frequency domain resource information configures that the frequency domain resource for the PDSCH comprises a frequency domain resource outside the downlink resource corresponding to the SBFD symbol.

22. The method according to claim 20, wherein in a case that it is determined that a symbol that can be used to send the PDSCH transmitted in the multiple slots to the terminal comprises the SBFD symbol and the non-SBFD symbol, the frequency domain resource information configures that a frequency domain resource for the PDSCH comprises a frequency domain resource for receiving the PDSCH on the SBFD symbol and a frequency domain resource for receiving the PDSCH on the non-SBFD symbol.

23. The method according to claim 20, wherein the indication field occupies 1 bit or 2 bits.

24. The method according to claim 23, wherein in a case that it is determined that a symbol that can be used to send the PDSCH transmitted in the multiple slots to the terminal comprises the SBFD symbol and the non-SBFD symbol, the indication field indicates that the terminal can receive the PDSCH transmitted in the multiple slots on the SBFD symbol and the non-SBFD symbol; and/or
in a case that it is determined that the symbol that can be used to send the PDSCH transmitted in the multiple slots to the terminal comprises the SBFD symbol or the non-SBFD symbol, the indication field indicates that the terminal can receive the PDSCH transmitted in the multiple slots only on the SBFD symbol or the non-SBFD symbol.

25. The method according to claim 23, wherein in a case that it is determined that a symbol that can be used to send the PDSCH transmitted in the multiple slots to the terminal comprises only the SBFD symbol, the indication field indicates that the terminal can receive the PDSCH transmitted in the multiple slots only on the SBFD symbol; and/or
in a case that it is determined that the symbol that can be used to send the PDSCH transmitted in the multiple slots to the terminal comprises only the non-SBFD symbol, the indication field indicates that the terminal can receive the PDSCH transmitted in the multiple slots only on the non-SBFD symbol; and/or,
in a case that it is determined that the symbol that can be used to send the PDSCH transmitted in the multiple slots to the terminal comprises the SBFD symbol and the non-SBFD symbol, the indication field is empty.

26. The method according to claim 23, wherein in a case that it is determined that a symbol that can be used to send the PDSCH transmitted in the multiple slots to the terminal comprises the SBFD symbol and the non-SBFD symbol, the indication field indicates that the terminal can receive the PDSCH transmitted in the multiple slots on the SBFD symbol and the non-SBFD symbol; and/or
in a case that it is determined that the symbol that can be used to send the PDSCH transmitted in the multiple slots to the terminal comprises only the SBFD symbol, the indication field indicates that the terminal can receive the PDSCH transmitted in the multiple slots only on the SBFD symbol; and/or,
in a case that it is determined that the symbol that can be used to send the PDSCH transmitted in the multiple slots to the terminal comprises only the non-SBFD symbol, the indication field indicates that the terminal can receive the PDSCH transmitted in the multiple slots only on the non-SBFD symbol.

27. The method according to any one of claims 19 to 26, further comprising:
in a case that it is determined that the PDSCH transmitted in the multiple slots can be sent on the SBFD symbol and the non-SBFD symbol, and a first frequency domain resource configured for the PDSCH is located within a downlink resource corresponding to the SBFD symbol in the first slot of the multiple slots:
sending the PDSCH in the first slot.

28. The method according to any one of claims 19 to 26, further comprising:
in a case that it is determined that the PDSCH transmitted in the multiple slots can be sent on the SBFD symbol and the non-SBFD symbol, and a symbol occupied by the PDSCH in a first slot of the multiple slots comprises at least one SBFD symbol, and a first frequency domain resource configured for the PDSCH comprises a frequency domain resource outside a downlink resource corresponding to the SBFD symbol in the first slot:
not sending the PDSCH in the first slot.

29. The method according to any one of claims 19 to 26, further comprising:
in a case that it is determined that the PDSCH transmitted in the multiple slots can be sent on the SBFD symbol and the non-SBFD symbol, a symbol occupied by the PDSCH in the multiple slots comprises at least one SBFD symbol, and a second frequency domain resource, which is an overlap between a first frequency domain resource configured for the PDSCH and a downlink resource corresponding to the SBFD symbol, exists in the multiple slots:
sending the PDSCH on the second frequency domain resource in the multiple slots.

30. The method according to any one of claims 19 to 26, further comprising:
in a case that it is determined that the PDSCH transmitted in the multiple slots can be sent on the SBFD symbol and the non-SBFD symbol, a symbol occupied by the PDSCH in the multiple slots comprises at least one SBFD symbol, and a second frequency domain resource, which is an overlap between a first frequency domain resource configured for the PDSCH and a downlink resource corresponding to the SBFD symbol, exists in the multiple slots:
sending the PDSCH on the second frequency domain resource on the SBFD symbol in a first slot of the multiple slots, and sending the PDSCH on the first frequency domain resource on the non-SBFD symbol in the first slot.

31. The method according to any one of claims 19 to 26, further comprising:
in a case that it is determined that the PDSCH transmitted in the multiple slots can be sent on the SBFD symbol and the non-SBFD symbol, and a symbol occupied by the PDSCH in the multiple slots comprises at least one SBFD symbol:
in a case that a symbol occupied by the PDSCH in a first slot of the multiple slots does not comprise an SBFD symbol, sending the PDSCH on a first frequency domain resource configured for the PDSCH in the first slot; and/or
in a case that the symbol occupied by the PDSCH in the first slot of the multiple slots comprises the SBFD symbol, sending the PDSCH on a second frequency domain resource which is an overlap between the first frequency domain resource configured for the PDSCH and a downlink resource corresponding to the SBFD symbol in the first slot.

32. The method according to any one of claims 19 to 26, further comprising:
in a case that it is determined that the PDSCH transmitted in the multiple slots can be sent on the SBFD symbol and the non-SBFD symbol, and a third frequency domain resource for receiving the PDSCH on the SBFD symbol and a fourth frequency domain resource for receiving the PDSCH on the non-SBFD symbol are configured:
sending the PDSCH on the third frequency domain resource on the SBFD symbol and sending the PDSCH on the fourth frequency domain resource on the non-SBFD symbol.

33. The method according to any one of claims 19 to 26, further comprising:
in a case that it is determined that the PDSCH transmitted in the multiple slots can be sent on the SBFD symbol and the non-SBFD symbol, and a symbol where the PDSCH is located in a first slot of the multiple slots comprises a non-SBFD symbol:
in a case that a downlink resource corresponding to the non-SBFD symbol is greater than or equal to a first frequency domain resource configured for the PDSCH, determining a fifth frequency domain resource in the downlink resource, and sending the PDSCH on the fifth frequency domain resource in the first slot, wherein a bandwidth of the fifth frequency domain resource is equal to a bandwidth of the first frequency domain resource; and/or
in a case that the downlink resource corresponding to the non-SBFD symbol is smaller than the first frequency domain resource configured for the PDSCH, not sending the PDSCH in the first slot.

34. The method according to any one of claims 19 to 26, further comprising:
in a case that it is determined that the PDSCH transmitted in the multiple slots can be sent only on the SBFD symbol, and a second frequency domain resource, which is an overlap between a first frequency domain resource configured for the PDSCH and a downlink resource corresponding to the SBFD symbol, exists in a first slot of the multiple slots:
in a case that a symbol occupied by the PDSCH in the first slot comprises the non-SBFD symbol, not sending the PDSCH in the first slot; and/or
in a case that the symbol occupied by the PDSCH in the first slot comprises the SBFD symbol and does not comprise an uplink symbol, sending the PDSCH on the second frequency domain resource in the first slot; and/or
in a case that the symbol occupied by the PDSCH in the first slot comprises only the SBFD symbol, sending the PDSCH on the second frequency domain resource in the first slot.

35. The method according to any one of claims 19 to 26, further comprising:
in a case that it is determined that the PDSCH transmitted in the multiple slots can be sent only on the non-SBFD symbol:
in a case that a symbol occupied by the PDSCH in a first slot of the multiple slots comprises the SBFD symbol, not sending the PDSCH in the first slot; and/or
in a case that the symbol occupied by the PDSCH in the first slot comprises a downlink symbol and/or a flexible symbol and does not comprise an uplink symbol, sending the PDSCH in the first slot; and/or
in a case that the symbol occupied by the PDSCH in the first slot only comprises the downlink symbol and/or the flexible symbol, sending the PDSCH in the first slot.

36. The method according to any one of claims 19 to 35, further comprising:
a symbol occupied by the PDSCH in a first slot of the multiple slots comprising an uplink symbol, not sending the PDSCH in the first slot.

37. A reception determination apparatus, configured in a terminal, the apparatus comprising:
a processing module configured to determine a symbol that can be used to receive a Physical Downlink Shared Channel (PDSCH) transmitted in multiple slots according to first information sent by a network device, wherein the symbol comprises at least one of: a Subband Full Duplex (SBFD) symbol or a non-SBFD symbol.

38. A reception indication apparatus, configured in a network device, the apparatus comprising:
a sending module configured to send first information to a terminal, wherein the first information is used to indicate to the terminal a symbol that can used to receive a PDSCH transmitted in multiple slots, and the symbol comprises at least one of: an SBFD symbol or a non-SBFD symbol.

39. A communication system, comprising a terminal and a network device, wherein the terminal is configured to implement the reception determination method according to any one of claims 1 to 18, and the network device is configured to implement the reception indication method according to any one of claims 19 to 36.

40. A communication apparatus, comprising:
a processor; and
a memory configured to store a computer program;
wherein when the computer program is executed by the processor, the reception determination method according to any one of claims 1 to 18 is implemented.

41. A communication apparatus, comprising:
a processor; and
a memory configured to store a computer program;
wherein when the computer program is executed by the processor, the reception indication method according to any one of claims 19 to 36 is implemented.

42. A computer-readable storage medium for storing a computer program, wherein when the computer program is executed by a processor, the reception determination method according to any one of claims 1 to 18 is implemented.

43. A computer-readable storage medium for storing a computer program, wherein when the computer program is executed by a processor, the reception indication method according to any one of claims 19 to 36 is implemented.
